# EUROPEAN PATENT SPECIFICATION

(11) **EP 3 657 472 B1**
(45) Date of publication and mention of the grant of the patent: **25.02.2026**
(21) Application number: 19211659.8
(22) Date of filing: 26.11.2019
(51) Int. Cl.: G08G 5/22, G08G 5/26, G06N 3/08

(54) **SYSTEMS AND METHODS FOR CREATING AND USING A CONTEXTUAL MODEL APPLICABLE TO PREDICTING AIRCRAFT WARNING CONDITIONS AND ANALYZING AIRCRAFT PERFORMANCE**
SYSTEME UND VERFAHREN ZUR ERSTELLUNG UND VERWENDUNG EINES KONTEXTMODELLS, DAS FÜR DIE VORHERSAGE VON FLUGZEUGWARNBEDINGUNGEN UND DIE ANALYSE DER LEISTUNG VON FLUGZEUGEN ANWENDBAR IST
SYSTÈMES ET PROCÉDÉS POUR CRÉER ET UTILISER UN MODÈLE CONTEXTUEL APPLICABLE À LA PRÉDICTION DES CONDITIONS D'AVERTISSEMENT D'AÉRONEFS ET À L'ANALYSE DES PERFORMANCES D'AÉRONEFS

(30) Priority: 26.11.2018 US 201862771532 P
(43) Date of publication of application: 27.05.2020
(73) Proprietor: Honeywell International Inc., Morris Plains, NJ 07950 (US)
(72) Inventor: LETSU-DAKE, Emmanuel, Morris Plains, NJ 07950 (US); ORHAN, Umut, Morris Plains, NJ 07950 (US); MOGHADAMFALAHI, Mohammed, Morris Plains, NJ 07950 (US)
(74) Representative: Haseltine Lake Kempner LLP

(56) References cited:
- US-A1- 2017 301 247
- US-A1- 2018 225 976
- US-A1- 2018 307 784

## Description

### RELATED APPLICATIONS

This application claims the benefit of priority to U.S. Provisional Application No. 62/771,532, filed November 26, 2018.

### TECHNICAL FIELD

Embodiments of the subject matter described herein relate generally to using machine learning techniques for analyzing flight data. More particularly, embodiments of the subject matter relate to employing machine learning to create a contextual model for use in-flight to make predictions and provide advisories, and for use post-flight to analyze data from completed flights.

### BACKGROUND

Machine learning is a method of data analysis that automates analytical model building, by using algorithms to parse data, learn from the data, and then make a determination or prediction based on learning from the data. By employing machine learning, a computer system can progressively improve its performance on a specific task using algorithms to build a mathematical model of sample data (i.e., training data) in order to make predictions or decisions without the computer system being explicitly programmed to perform the task. Thus, the computer system can learn from the sample data, identify patterns, and make decisions with minimal human intervention. Machine learning techniques may be applied to any situation for which decisions are made based on complex data analysis. For example, machine learning may be applied to flight data for improved analysis of flight events and increased situational awareness.

Accordingly, it is desirable to provide machine learning applications for flight data analysis and decision making. Furthermore, other desirable features and characteristics will become apparent from the subsequent detailed description and the appended claims, taken in conjunction with the accompanying drawings and the foregoing technical field and background. The present invention addresses the problem of providing an improved means for identifying probable causes of aircraft performance events and probable aircraft performance events resulting from current conditions. US 2018/307784 A1 relates to usage based lifing. Other relevant prior art is disclosed in US 2018/225976 A1.
The present invention in its various aspects is set out in the appended claims.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a diagram of a system for providing contextual modeling data for analysis and predictions, in accordance with the disclosed embodiments;
FIG. 2 is a functional block diagram of a central computer system for use in a system for providing contextual modeling data, in accordance with the disclosed embodiments;
FIG. 3 is a functional block diagram of a computing device for use in a system for providing contextual modeling data, in accordance with the disclosed embodiments;
FIG. 4 is a functional block diagram of another computing device for use in a system for providing contextual modeling data, in accordance with the disclosed embodiments;
FIG. 5 is a diagram of a graphical user interface provided by an online application and used to present landing performance analysis data, in accordance with the disclosed embodiments;
FIG. 6 is a diagram of a graphical user interface provided by an online application and used to present pilot performance analysis data, in accordance with the disclosed embodiments;
FIG. 7 is a diagram of a second graphical user interface provided by an online application and used to present pilot performance analysis data, in accordance with the disclosed embodiments;
FIG. 8 is a diagram of a third graphical user interface provided by an online application and used to present pilot performance analysis data, in accordance with the disclosed embodiments;
FIG. 9 is a diagram of aircraft approach segments suitable for applying a contextual model to obtain stability advisories, in accordance with the disclosed embodiments;
FIG. 10 is a flow chart that illustrates an embodiment of a process for creating and using a contextual artificial intelligence (AI) model to analyze flight data for one or more aircraft, in accordance with the disclosed embodiments;
FIG. 11 is a flow chart that illustrates an embodiment of a process for creating a contextual artificial intelligence (AI) model, in accordance with the disclosed embodiments;
FIG. 12 is a flow chart that illustrates an embodiment of a process for dynamically updating and using a contextual artificial intelligence (AI) model, in accordance with the disclosed embodiments;
FIG. 13 is a flow chart that illustrates an embodiment of a process for obtaining a set of aggregate contextual data for use as part of a contextual artificial intelligence (AI) model, in accordance with the disclosed embodiments;
FIG. 14 is a flow chart that illustrates an embodiment of a process for presenting the set of results via a display device, in accordance with the disclosed embodiments;
FIG. 15 is a flow chart that illustrates an embodiment of a process for analyzing past landing performance of one or more aircraft, by a central computer system, in accordance with the disclosed embodiments;
FIG. 16 is a flow chart that illustrates an embodiment of a process for using a contextual artificial intelligence (AI) model to perform an evaluation of past landing performance of one or more aircraft, in accordance with the disclosed embodiments;
FIG. 17 is a flow chart that illustrates an embodiment of a process for performing a landing dispersion analysis, a threshold crossing height analysis, and a speed at threshold analysis, in accordance with the disclosed embodiments;
FIG. 18 is a flow chart that illustrates an embodiment of a process for narrowing a set of statistically significant variables to identify one or more probable causes according to highest probabilities of occurrence, in accordance with the disclosed embodiments;
FIG. 19 is a flow chart that illustrates an embodiment of a process for providing approach data onboard an aircraft during a current flight, in accordance with the disclosed embodiments;
FIG. 20 is a flow chart that illustrates an embodiment of a process for determining locations of the current flight for providing approach stability advisories, in accordance with the disclosed embodiments;
FIG. 21 is a flow chart that illustrates an embodiment of a process for updating the probability of stability during the current flight, in accordance with the disclosed embodiments;
FIG. 22 is a flow chart that illustrates an embodiment of a process for using the contextual artificial intelligence (AI) model to perform an evaluation of approach procedure data, in accordance with the disclosed embodiments; and
FIG. 23 is a flow chart that illustrates an embodiment of a process for presenting an advisory onboard an aircraft, including approach procedure stability predictions, in accordance with the disclosed embodiments.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The present disclosure describes a method of flight data analytics utilizing artificial intelligence to train and process contextual data to improve aircraft operator performance. Contextual data may include aircraft operator background (e.g., familiar airports), aircraft operator training records, environmental factors (e.g., temperature, visibility, weather, etc), and airport data (e.g., runway information, traffic information, taxi information, etc). The contextual data may be processed by the artificial intelligence model to understand operator performance and achievements and may provide proactive assistance to operators when approaching flight segments that may reach or exceed a predetermined likelihood of negative safety event. For example, a proactive warning may be presented to the operator to assist in stabilized approach, and avoiding runway overruns.

the contextual data may be received from multiple sources and correlated to provide predictions of safety related events during aircraft flight. The correlation may be performed by machine learning approaches, such as logistic regression, and inputted into the trained artificial intelligence model to determine probabilities and predictions of safety related events occurring, and proactive warnings and assistance may then be provided to aircraft operators.

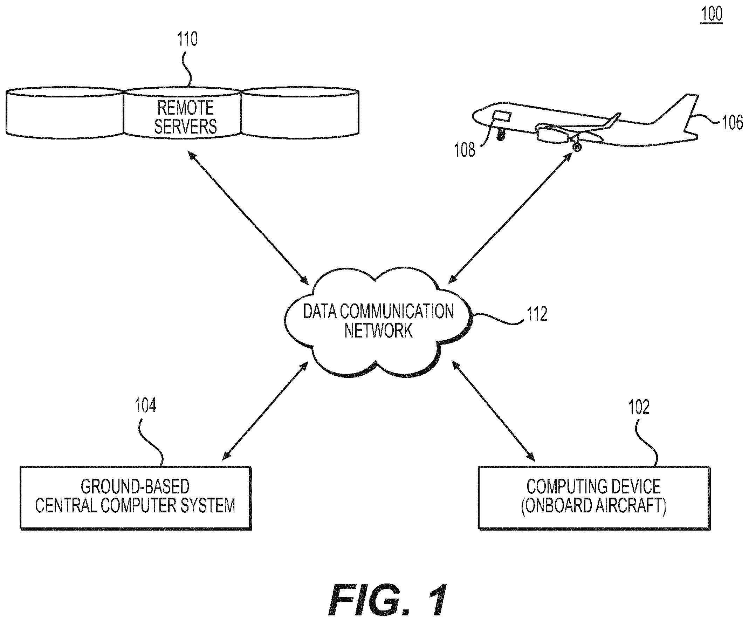

Turning now to the figures, FIG. 1 is a diagram of a system 100 for providing contextual modeling data for analysis and predictions, in accordance with the disclosed embodiments. The system 100 operates to create, train, and update a contextual artificial intelligence (AI) model for use in analyzing flight data. The system 100 may include, without limitation, a computing device 102 that communicates with a ground-based central computer system 104, one or more avionics systems 108 onboard an aircraft 106, and at least one remote server system 110, via a data communication network 112. In practice, certain embodiments of the system 100 may include additional or alternative elements and components, as desired for the particular application.

The computing device 102 may be implemented by any computing device that includes at least one processor, some form of memory hardware, a user interface, and communication hardware. For example, the computing device 102 may be implemented using a personal computing device, such as a tablet computer, a laptop computer, a personal digital assistant (PDA), a smartphone, or the like. In this scenario, the computing device 102 is capable of storing, maintaining, and executing an Electronic Flight Bag (EFB) application configured to determine and present flight data analysis, including approach procedure stability prediction data and/or landing performance analysis data. In other embodiments, the computing device 102 may be implemented using a computer system onboard the aircraft 106, which is configured to determine and present flight data analysis.

The ground-based central computer system 104 may be implemented by any computer system that includes at least one processor, some form of memory hardware, a user interface, and communication hardware. For example, the ground-based central computer system 104 may be implemented using a desktop computer, a laptop computer, a mainframe computer system, a server system comprising one or more servers, or the like. In other embodiments, the ground-based central computer system 104 may be implemented using a personal computing device, such as a tablet computer, a laptop computer, a personal digital assistant (PDA), a smartphone, or the like. The ground-based central computer system 104 is configured to host, and permit access to, a "web application" or "web app", which is an internet-based or intranet-based software application for presenting flight data analysis. The ground-based central computer system 104 permits secondary computer systems (e.g., the computing device 102) to access the web app and associated functionality and features via the data communication network 112.

The aircraft 106 may be any aviation vehicle for which approach procedure stability predictions are relevant and applicable during completion of a flight route, and/or past landing performance analysis is relevant and applicable following completion of a flight route. The aircraft 106 may be implemented as an airplane, helicopter, spacecraft, hovercraft, or the like. The one or more avionics systems 108 may include a Flight Management System (FMS), Automatic Dependent Surveillance - Broadcast (ADS-B) devices, Terrain Awareness and Warning System (TAWS) devices, navigation devices, weather radar, brake systems, or the like. Data obtained from the one or more avionics systems 108 may include, without limitation: flight plan data, current and updated flight parameter data, weather data, airport data, runway analysis data, aircraft performance data, or the like.

The server system 110 may include any number of application servers, and each server may be implemented using any suitable computer. In some embodiments, the server system 110 includes one or more dedicated computers. In some embodiments, the server system 110 includes one or more computers carrying out other functionality in addition to server operations. Each server of the server system 110 may be maintained by any applicable business or organization (e.g., government and regulatory agencies, universities and other research-based organizations, airlines, aviation safety monitoring organizations, safety data aggregators, weather data aggregators, traffic data aggregators), and each server of the server system 110 may store and provide any type of data used to perform flight data analysis. Such data may include, without limitation: historical weather data (e.g., wind speed, cloud cover, visibility, precipitation, temperature); airport and air traffic control (ATC) data (e.g., airport, runway length, ATIS, airport arrival rate, arrival/departure taxi time); Automatic Terminal Information Service (ATIS) data (e.g., current weather data, active runways, available approaches, Notices to Airmen (NOTAMs)); aircraft and flight-specific data (e.g., flight state data (Quick Access Recorder data, Aircraft Standard Communication Bus data), flight plan data, aircraft condition data, condition-based maintenance (CBM) data, aircraft specifications, NOTAMs); and human factor data associated with flight crew members (e.g., pilot certifications, hours of training data, duty cycle data). Exemplary embodiments of the server system 110 may include weather services, operations and performance data services (e.g., the Federal Aviation Administration System Wide Information Management, archived data, and/or current data), or the like.

The computing device 102 is usually located onboard the aircraft 106, and the computing device 102 communicates with the one or more avionics systems 108 via wired and/or wireless communication connection. The computing device 102 and the server system 110 are generally disparately located, and the computing device 102 communicates with the server system 110 via the data communication network 112 and/or via communication mechanisms onboard the aircraft 106. Similarly, the ground-based central computer system 104 is usually located external to the aircraft 106, in a ground-based location, and is configured to communicate with one or more secondary computer systems (e.g., the computing device 102), the one or more avionics systems 108, and the server system 110 via wired and/or wireless communication connection established via the data communication network 112.

The data communication network 112 may be any digital or other communications network capable of transmitting messages or data between devices, systems, or components. In certain embodiments, the data communication network 112 includes a packet switched network that facilitates packet-based data communication, addressing, and data routing. The packet switched network could be, for example, a wide area network, the Internet, or the like. In various embodiments, the data communication network 112 includes any number of public or private data connections, links or network connections supporting any number of communications protocols. The data communication network 112 may include the Internet, for example, or any other network based upon TCP/IP or other conventional protocols. In various embodiments, the data communication network 112 could also incorporate a wireless and/or wired telephone network, such as a cellular communications network for communicating with mobile phones, personal digital assistants, and/or the like. The data communication network 112 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

During typical operation, the ground-based central computer system 104 obtains relevant data associated with flight data modeling and analysis from the one or more remote servers of the server system 110. The ground-based computer system 104 then uses the relevant data to create and train a contextual artificial intelligence (AI) model for use in (1) performing landing performance analysis and determining probable cause of events occurring during past flights that are already completed; and (2) predicting approach stability in-flight, based on current flight data parameters and conditions and a probable stable or unstable condition of the aircraft 106. The ground-based central computer system 104 is further configured to perform landing performance analysis, generate reports and other landing performance results information, and to host a web application for presenting the landing performance results and reporting, such that other secondary, external computer systems (e.g., the computing device 102) can access the landing performance data provided by the ground-based central computer system 104. Further, during typical operation, the computing device 102 receives a trained contextual AI model for purposes of predicting stability of approach during flight of the aircraft 106. The computing device 102 receives current updated aircraft parameter data during flight and updates the contextual AI model continuously during flight, when the aircraft 106 is located far enough away from a designated landing runway that the flight crew onboard the aircraft 106 can make flight adjustments to alter the approach procedure and ensure a stable approach, without requiring the aircraft to "go-around" and begin the approach procedure again.

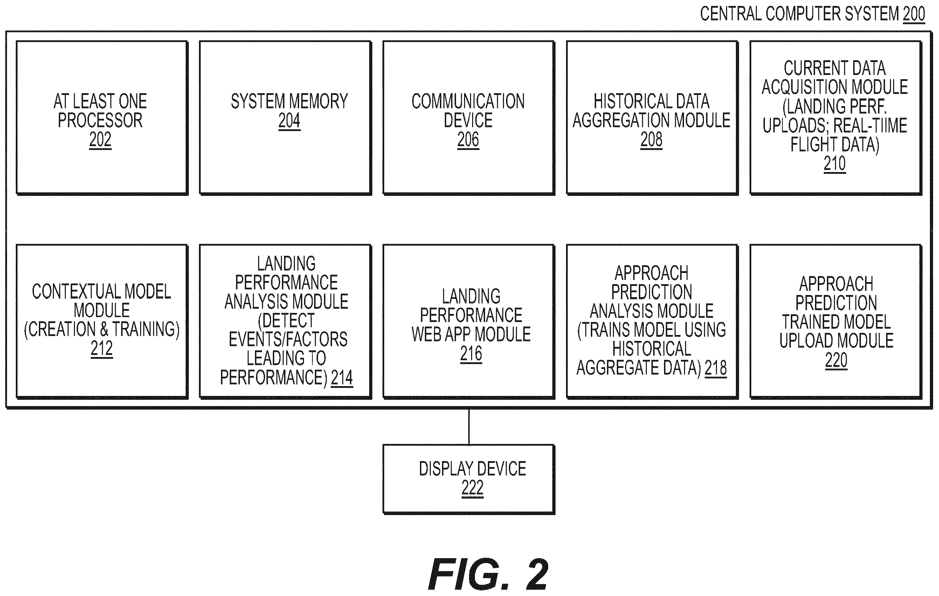

FIG. 2 is a functional block diagram of a central computer system 200 for use in a system for providing contextual modeling data, in accordance with the disclosed embodiments. It should be noted that the central computer system 200 can be implemented with the ground-based central computer system 104 depicted in FIG. 1. In this regard, the central computer system 200 shows certain elements and components of the ground-based central computer system 104 in more detail. The central computer system 200 generally includes, without limitation: at least one processor 202; system memory 204; a communication device 206; a historical data aggregation module 208; a current data acquisition module 210; a contextual model module 212; a landing performance analysis module 214; a landing performance web app module 216; an approach prediction analysis module 218; an approach prediction trained model upload module 220; and a display device 222. These elements and features of the central computer system 200 may be operatively associated with one another, coupled to one another, or otherwise configured to cooperate with one another as needed to support the desired functionality - in particular, creating, updating, and training a contextual artificial intelligence (AI) model for performing flight data analysis, as described herein. For ease of illustration and clarity, the various physical, electrical, and logical couplings and interconnections for these elements and features are not depicted in FIG. 2. Moreover, it should be appreciated that embodiments of the central computer system 200 will include other elements, modules, and features that cooperate to support the desired functionality. For simplicity, FIG. 2 only depicts certain elements that relate to the contextual AI modeling and analysis techniques described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 is communicatively coupled to the system memory 204. The system memory 204 is configured to store any obtained or generated data associated with flight data analysis and/or contextual artificial intelligence (AI) modeling, machine learning, landing performance analysis and reporting, approach procedure stability predictions, and graphical elements associated with the system. The system memory 204 may be realized using any number of devices, components, or modules, as appropriate to the embodiment. Moreover, the computing device 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the computing device 200. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The communication device 206 is suitably configured to communicate data between the central computer system 200 and one or more secondary external computer systems, one or more remote servers, and one or more avionics systems onboard an aircraft. The communication device 206 may transmit and receive communications over a wireless local area network (WLAN), the Internet, a satellite uplink/downlink, a cellular network, a broadband network, a wide area network, or the like. As described in more detail below, data received by the communication device 206 may include, without limitation: historical weather data (e.g., wind speed, cloud cover, visibility, precipitation, temperature); airport and air traffic control (ATC) data (e.g., airport, runway length, ATIS, airport arrival rate, arrival/departure taxi time); Automatic Terminal Information Service (ATIS) data (e.g., current weather data, active runways, available approaches, Notices to Airmen (NOTAMs)); aircraft and flight-specific data (e.g., flight state data (Quick Access Recorder data, Aircraft Standard Communication Bus data), flight plan data, aircraft condition data, condition-based maintenance (CBM) data, aircraft specifications, NOTAMs); and human factor data associated with flight crew members (e.g., pilot certifications, hours of training data, duty cycle data). Data provided by the communication device 206 may include, without limitation: a data upload file comprising a contextual AI model, an updated contextual AI model, a trained contextual AI model, landing performance reporting and results data, and the like.

The historical data aggregation module 208 is configured to create an aggregate set of historical data for use in creating and training the contextual AI model, wherein the aggregate set of historical data may include, without limitation: historical weather data (e.g., wind speed, cloud cover, visibility, precipitation, temperature); airport and air traffic control (ATC) data (e.g., airport, runway length, ATIS, airport arrival rate, arrival/departure taxi time); Automatic Terminal Information Service (ATIS) data (e.g., current weather data, active runways, available approaches, Notices to Airmen (NOTAMs)); aircraft and flight-specific data (e.g., flight state data (Quick Access Recorder data, Aircraft Standard Communication Bus data), flight plan data, aircraft condition data, condition-based maintenance (CBM) data, aircraft specifications, NOTAMs); and human factor data associated with flight crew members (e.g., pilot certifications, hours of training data, duty cycle data). Exemplary embodiments of the server system 110 may include weather services, operations and performance data services (e.g., the Federal Aviation Administration System Wide Information Management, archived data, and/or current data), or the like.

The current data acquisition module 210 is configured to obtain real-time flight data, including a current updated set of flight parameters from one or more avionics systems onboard an aircraft during flight, for use in making approach stability predictions in-flight. The current data acquisition module 210 is further configured to obtain updated data uploads including current landing performance data to include in the set of aggregated historical landing data.

The contextual model module 212 is configured to create a contextual artificial intelligence (AI) model for use in performing landing analysis post-flight, and making approach procedure stability predictions in-flight. The contextual model module 212 obtains a set of aggregate contextual data comprising at least aircraft and flight-specific data, airport and air traffic control (ATC) data, weather data, and human factor data associated with flight crew members of the one or more aircraft. The contextual model module 212 creates the contextual AI model using the set of aggregate contextual data and applies the contextual AI model to a set of flight data, to perform a statistical analysis. The contextual model module 212 generates a set of results based on the statistical analysis, wherein the set of results comprises at least one of probable causes of aircraft performance events and probable aircraft performance events resulting from current conditions. The contextual model module 212 presents the set of results, via the display device 222. This provides an improved basis for adapting aircraft operation in current conditions and predicted conditions. The contextual model module 212 obtains a machine learning framework, wherein the machine learning framework comprises at least one of an artificial neural network (ANN) and machine learning algorithms. The contextual model module 212 trains the machine learning framework using the set of aggregate contextual data, to generate the contextual AI model. After the contextual AI model is created, applying the contextual AI model to the set of flight data further comprises using the trained machine learning framework including the set of aggregate contextual data, to perform the statistical analysis.

The landing performance analysis module 214 is configured to perform landing performance analysis based on an aggregate set of historical landing data.

The landing performance web app module 216 hosts a web application to present landing performance analysis results and reporting, and to provide access to the landing performance analysis data and associated web app functionality. In practice, the landing performance web app module 216 enables a user to interact with landing performance data, to make selections, to view aggregate sets of data, to request conclusions, such as a list of the probable causes of particular aircraft performance events that occurred during one or more aircraft landings for which landing performance data is available.

The approach prediction analysis module 218 is configured to use the contextual AI model and continuously updated flight data parameters (obtained from one or more aircraft onboard avionics devices) to predict the stability or instability of a current approach procedure, during flight.

The approach prediction trained model upload module 220 is configured to provide a data transmission for use in-flight, wherein the data transmission includes a trained contextual AI model that has been trained using a historical set of aggregate approach procedure data.

The display device 222 is configured to display various icons, text, and/or graphical elements associated with flight data analysis using a contextual Al model, and the like. In an exemplary embodiment, the display device 222 is communicatively coupled to the at least one processor 202. The at least one processor 202 and the display device 222 are cooperatively configured to display, render, or otherwise convey one or more graphical representations or images associated with flight data analysis and predictions using a contextual AI model on the display device 222, as described in greater detail below. In an exemplary embodiment, the display device 222 is realized as an electronic display configured to graphically display flight data analysis and prediction data, as described herein. It will be appreciated that although the display device 222 may be implemented using a single display, certain embodiments may use additional displays (i.e., a plurality of displays) to accomplish the functionality of the display device 222 described herein.

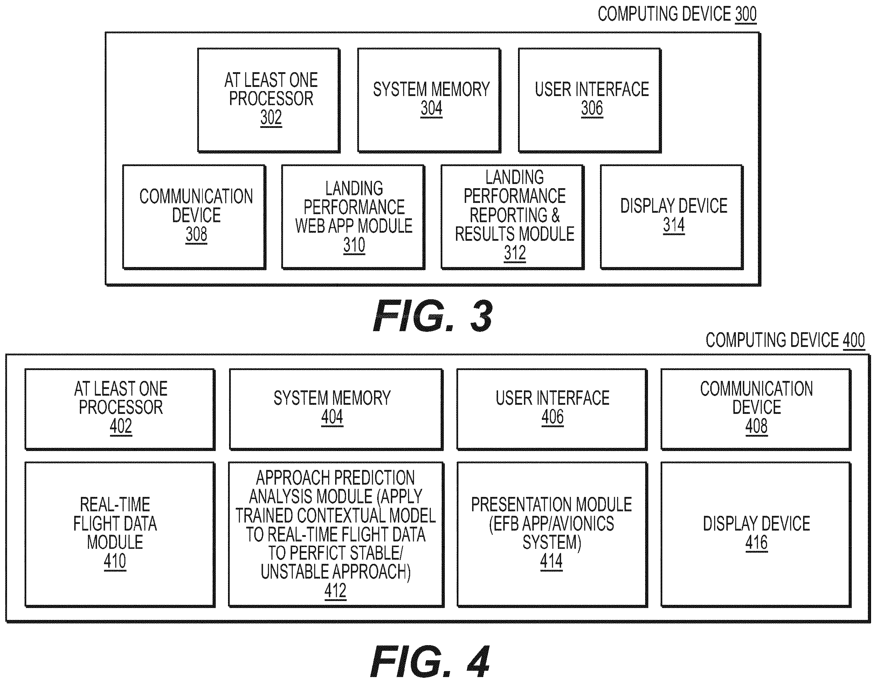

FIG. 3 is a functional block diagram of a computing device for use in a system for providing contextual modeling data, in accordance with the disclosed embodiments. The functional block diagram of computing device 300 may be used after a flight has been completed for data analysis. The data analysis may be performed via an application and may include at least one processor 302; system memory 304; user interface 306; communication device 308; landing performance web app module 310; landing performance reporting and results module 312; and a display device 314.

The at least one processor 302 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 302 may be realized as one or more microprocessors, controllers, microcontrollers, or state machines. Moreover, the at least one processor 302 may be implemented as a combination of computing devices, e.g., a combination of digital signal processors and microprocessors, a plurality of microprocessors, one or more microprocessors in conjunction with a digital signal processor core, or any other such configuration.

The at least one processor 302 may be communicatively coupled to the system memory 304. The system memory 304 may be configured to store any obtained or generated data associated with flight data analysis and/or contextual artificial intelligence (AI) modeling, machine learning, landing performance analysis and reporting, approach procedure stability predictions, and graphical elements associated with the system. The system memory 304 may be realized using any number of devices, components, or modules, as appropriate to the embodiment. Moreover, the computing device 300 could include system memory 304 integrated therein and/or a system memory 304 operatively coupled thereto, as appropriate to the particular embodiment. In practice, the system memory 304 could be realized as RAM memory, flash memory, EPROM memory, EEPROM memory, registers, a hard disk, a removable disk, or any other form of storage medium known in the art. In certain embodiments, the system memory 304 may include a hard disk, which may also be used to support functions of the computing device 300. The system memory 304 can be coupled to the at least one processor 302 such that the at least one processor 302 can read information from, and write information to, the system memory 304. In the alternative, the system memory 304 may be integral to the at least one processor 302. As an example, the at least one processor 302 and the system memory 304 may reside in a suitably designed application-specific integrated circuit (ASIC).

The user interface 306 may be suitably configured to present appropriate information and/or data to an user operating the computing device 300. The user interface 306 may be displayed via the display device 314 and may contain icons, graphs, and user interactive elements.

The communication device 308 may be suitably configured to communicate data between the central computer system 300 and one or more secondary external computer systems, one or more remote servers, and one or more avionics systems onboard an aircraft. The communication device 308 may transmit and receive communications over a wireless local area network (WLAN), the Internet, a satellite uplink/downlink, a cellular network, a broadband network, a wide area network, or the like. As described in more detail below, data received by the communication device 308 may include, without limitation: historical weather data (e.g., wind speed, cloud cover, visibility, precipitation, temperature); airport and air traffic control (ATC) data (e.g., airport, runway length, ATIS, airport arrival rate, arrival/departure taxi time); Automatic Terminal Information Service (ATIS) data (e.g., current weather data, active runways, available approaches, Notices to Airmen (NOTAMs)); aircraft and flight-specific data (e.g., flight state data (Quick Access Recorder data, Aircraft Standard Communication Bus data), flight plan data, aircraft condition data, condition-based maintenance (CBM) data, aircraft specifications, NOTAMs); and human factor data associated with flight crew members (e.g., pilot certifications, hours of training data, duty cycle data). Data provided by the communication device 308 may include, without limitation: a data upload file comprising a contextual AI model, an updated contextual AI model, a trained contextual AI model, landing performance reporting and results data, and the like.

The landing performance web app module 310 may host a web application to present landing performance analysis results and reporting, and to provide access to the landing performance analysis data and associated web app functionality. The landing performance analysis results and reporting may be conducted via the landing performance reporting and results module 312. In practice, the landing performance web app module 310 and the landing performance reporting and results module 312 may enable a user to interact with landing performance data, to make selections, to view aggregate sets of data, to request conclusions, such as a list of the probable causes of particular aircraft performance events that occurred during one or more aircraft landings for which landing performance data is available. This enables improved planning for predicted performance events occurring during aircraft landings.

The display device 314 may be configured to display various icons, text, and/or graphical elements associated with flight data analysis using a contextual AI model, and the like. In an exemplary embodiment, the display device 314 is communicatively coupled to the at least one processor 302. The at least one processor 302 and the display device 314 are cooperatively configured to display, render, or otherwise convey one or more graphical representations or images associated with aircraft landing performance using a contextual AI model on the display device 314. It will be appreciated that although the display device 314 may be implemented using a single display, certain embodiments may use additional displays (i.e., a plurality of displays) to accomplish the functionality of the display device 314 described herein.

FIG. 4 is a functional block diagram of another computing device for use in a system for providing contextual modeling data, in accordance with the disclosed embodiments. The functional block diagram of computing device 400 may be used during a flight for data analysis and predictions. The data analysis may be performed via an electronic flight bag (EFB) and may include at least one processor 402; system memory 404; user interface 406; communication device 408; real-time flight data module 410; approach prediction analysis module 412; presentation module 414; and a display device 416.

The at least one processor 402 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 402 may be realized as one or more microprocessors, controllers, microcontrollers, or state machines. Moreover, the at least one processor 402 may be implemented as a combination of computing devices, e.g., a combination of digital signal processors and microprocessors, a plurality of microprocessors, one or more microprocessors in conjunction with a digital signal processor core, or any other such configuration.

The at least one processor 402 may be communicatively coupled to the system memory 404. The system memory 404 may be configured to store any obtained or generated data associated with flight data analysis and/or contextual artificial intelligence (AI) modeling, machine learning, landing performance analysis and reporting, approach procedure stability predictions, and graphical elements associated with the system. The system memory 404 may be realized using any number of devices, components, or modules, as appropriate to the embodiment. Moreover, the computing device 400 could include system memory 404 integrated therein and/or a system memory 404 operatively coupled thereto, as appropriate to the particular embodiment. In practice, the system memory 404 could be realized as RAM memory, flash memory, EPROM memory, EEPROM memory, registers, a hard disk, a removable disk, or any other form of storage medium known in the art. In certain embodiments, the system memory 404 may include a hard disk, which may also be used to support functions of the computing device 400. The system memory 404 can be coupled to the at least one processor 402 such that the at least one processor 402 can read information from, and write information to, the system memory 404. In the alternative, the system memory 404 may be integral to the at least one processor 402. As an example, the at least one processor 402 and the system memory 404 may reside in a suitably designed application-specific integrated circuit (ASIC).

The user interface 406 may be suitably configured to present appropriate information and/or data to an user operating the computing device 400. The user interface 406 may be displayed via the display device 416 and may contain icons, graphs, and user interactive elements.

The communication device 408 may be suitably configured to communicate data between the central computer system 400 and one or more secondary external computer systems, one or more remote servers, and one or more avionics systems onboard an aircraft. The communication device 408 may transmit and receive communications over a wireless local area network (WLAN), the Internet, a satellite uplink/downlink, a cellular network, a broadband network, a wide area network, or the like. As described in more detail below, data received by the communication device 408 may include, without limitation: historical weather data (e.g., wind speed, cloud cover, visibility, precipitation, temperature); airport and air traffic control (ATC) data (e.g., airport, runway length, ATIS, airport arrival rate, arrival/departure taxi time); Automatic Terminal Information Service (ATIS) data (e.g., current weather data, active runways, available approaches, Notices to Airmen (NOTAMs)); aircraft and flight-specific data (e.g., flight state data (Quick Access Recorder data, Aircraft Standard Communication Bus data), flight plan data, aircraft condition data, condition-based maintenance (CBM) data, aircraft specifications, NOTAMs); and human factor data associated with flight crew members (e.g., pilot certifications, hours of training data, duty cycle data). Data provided by the communication device 408 may include, without limitation: a data upload file comprising a contextual AI model, an updated contextual AI model, a trained contextual AI model, landing performance reporting and results data, and the like.

The real-time flight data module 410 may be configured to obtain real-time flight data, including a current updated set of flight parameters from one or more avionics systems onboard an aircraft during flight, for use in making approach stability predictions in-flight. The real-time flight data acquisition module 410 is further configured to obtain updated data uploads including current landing performance data to include in the set of aggregated historical landing data.

The approach prediction analysis module 412 may be configured to use the contextual AI model and continuously updated flight data parameters (obtained from one or more aircraft onboard avionics devices) to predict the stability or instability of a current approach procedure, during flight.

The presentation module 414 may be configured to present the result of the approach prediction analysis module, such as any predicted stable or unstable approach segment of the aircraft. The presentation may be presented on the EFB and/or the avionics system on the aircraft and operated by aircraft crew or via the display device 416.

The display device 416 may be configured to display various icons, text, and/or graphical elements associated with flight data analysis using a contextual AI model, and the like. In an exemplary embodiment, the display device 416 is communicatively coupled to the at least one processor 402. The at least one processor 402 and the display device 416 are cooperatively configured to display, render, or otherwise convey one or more graphical representations or images associated with aircraft approach prediction using a contextual AI model on the display device 416. It will be appreciated that although the display device 416 may be implemented using a single display, certain embodiments may use additional displays (i.e., a plurality of displays) to accomplish the functionality of the display device 416 described herein.

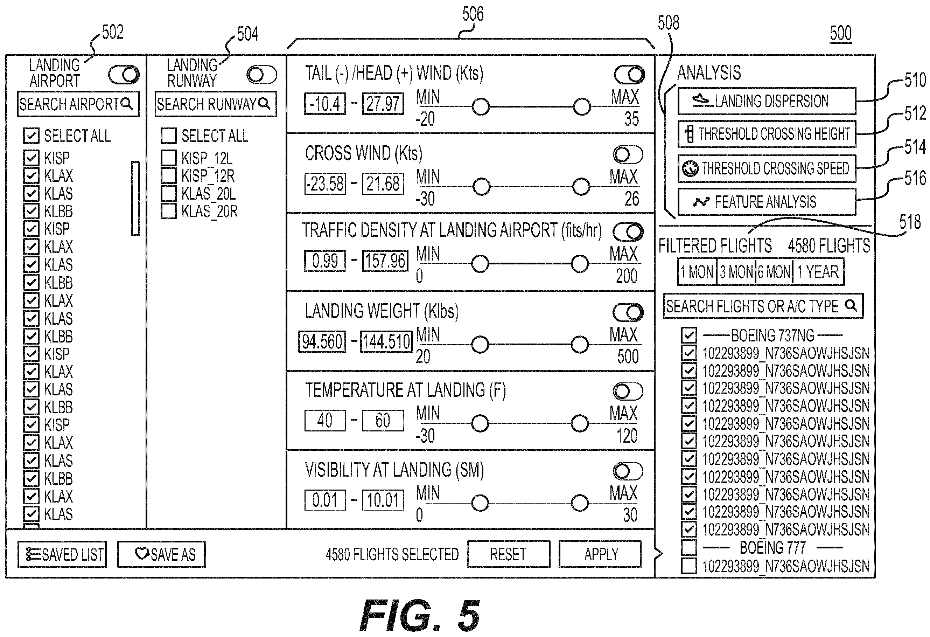

FIG. 5 is a diagram of an exemplary graphical user interface 500 provided by an online application and used to present landing performance analysis data, in accordance with the disclosed embodiments. Graphical user interface 500 may include landing airport segment 502, landing runway segment 504, landing parameters segment 506, analysis options 508, and filter flights option 518. Analysis options 508 may include landing dispersion 510, threshold crossing height 512, threshold crossing speed 514, and feature analysis 516. The filter flights option 518 may enable a user to select and filter flights in predetermined time periods, for example, all flights in the past month, all flights in the past 3 months, all flights in the past 6 months, and all flights in the past 1 year, etc. The filter flights option 518 may also include filtering by aircraft type, for example, "Boeing 737NG", and "Boeing 777". The landing airport segment 502 may allow the user to search and/or select specific landing airports to view and analyze landing performance analysis data. The landing runway segment 504 may allow the user to search and/or select a specific landing runway of the landing airport to view and analyze landing performance analysis data. The landing parameters segment 506 may allow the user to select and adjust landing factors for data analysis. Landing factors may include tail/head wind, cross wind, traffic density at landing airport, landing weight, temperature at landing, and visibility at landing. While exemplary factors are displayed in segment 506, other relevant landing factors may also be included.

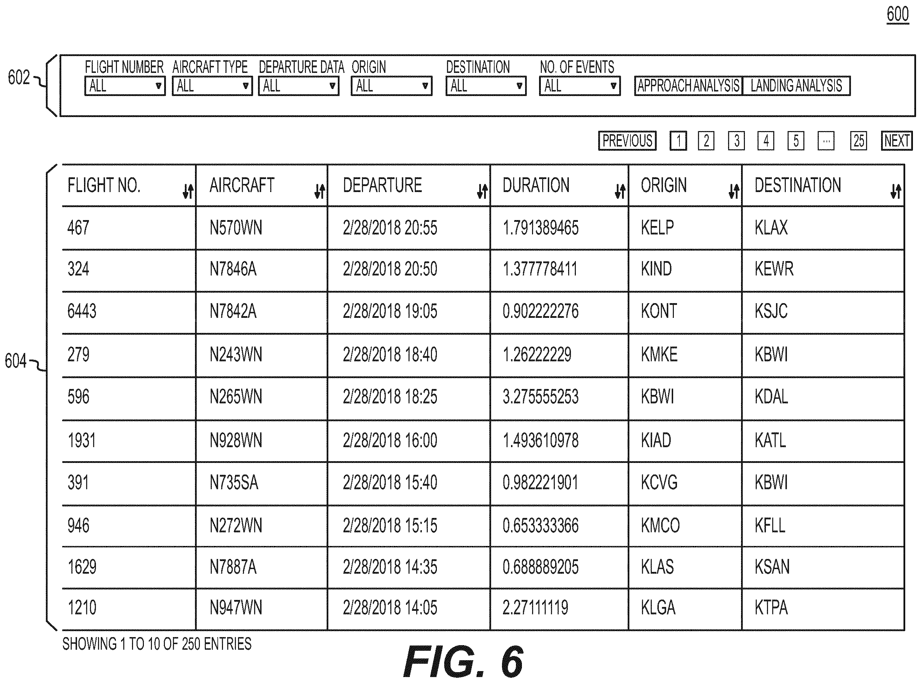

FIG. 6 is a diagram of an exemplary graphical user interface 600 provided by an online application and used to present pilot performance analysis data, in accordance with the disclosed embodiments. Graphical user interface 600 may include information filtering panel 602, and flight information panel 604. The information filtering panel 602 may include options for the user to select data based on flight number, aircraft type, departure dates, origin, destination, number of events, and may further allow the user to perform analysis on the approach data, or landing data. The flight information panel 604 may display a list of flights and may include information related to the flight number, aircraft type, departure dates, duration of travel, origin airport and destination airport. The user may select one or more of the flights in the flight information panel 604 and may perform the respective analysis on the approach data or landing data.

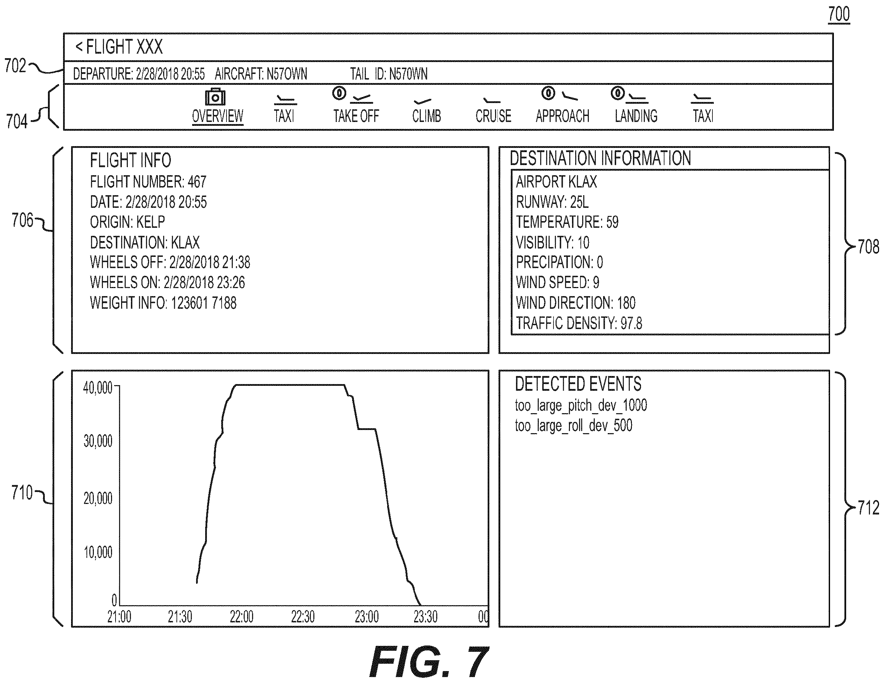

FIG. 7 is a diagram of an exemplary second graphical user interface 700 provided by an online application and used to present pilot performance analysis data, in accordance with the disclosed embodiments. Graphical user interface 700 may include flight information panel 702, view selection panel 704, flight information panel 706, destination information panel 708, data graph panel 710, and detected events panel 712. The flight information panel 702 may display information related to the flight, for example departure date and time, aircraft type, and tail identification of the aircraft. The view selection panel 704 may allow the user to select the specific segments of the flight to view the associated data. For example, the user may select an overview of the entire flight, the departure taxi segment of the flight, take off segment of the flight, climb segment of the flight, cruise segment of the flight, approach segment of the flight, landing segment of the flight, and arrival taxi segment of the flight. The flight information panel 706 may display information related to the flight. For example, information related to the flight number, departure date and time, origin airport, destination airport, wheels off date and time, wheels on date and time, and weight information of the aircraft may be displayed. Other relevant information may also be displayed in flight information panel 706. The destination information panel 708 may display information related to the destination. For example, information related to the destination airport, runway identification, and weather condition may be displayed. Other relevant destination information may also be displayed in destination information panel 708. The data graph panel 710 may display the appropriate graph based on the view selection from the view selection panel 704. For example, with the overview option selected, the data graph panel 710 may display a graph of the flight including the climb, cruise and approach segments of the flight. The detected events panel 712 may display relevant detected events based on the view selection selected. For example, with the overview option selected, 2 events are detected and may be related to pitch deviation and roll deviation of the flight.

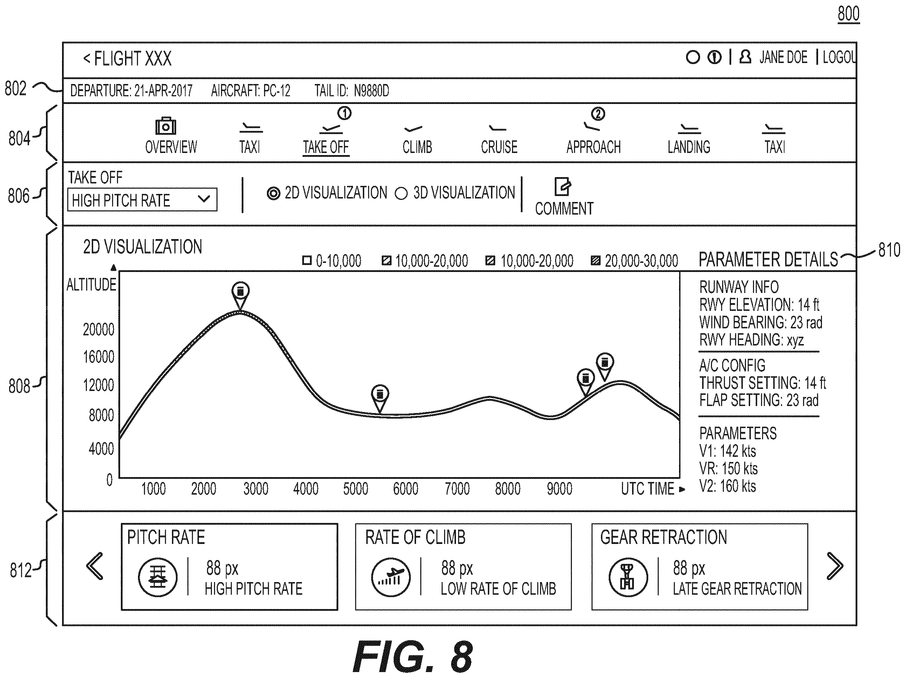

FIG. 8 is a diagram of an exemplary third graphical user interface 800 provided by an online application and used to present pilot performance analysis data, in accordance with the disclosed embodiments. Graphical user interface 800 may include flight information panel 802, view selection panel 804, visualization option selection panel 806, visualization representation panel 808, parameter details panel 810, and events panel 812. The flight information panel 802 may display information related to the flight, for example departure date and time, aircraft type, and tail identification of the aircraft. The view selection panel 804 may allow the user to select the specific segments of the flight to view the associated data. For example, the user may select an overview of the entire flight, the departure taxi segment of the flight, take off segment of the flight, climb segment of the flight, cruise segment of the flight, approach segment of the flight, landing segment of the flight, and arrival taxi segment of the flight. The visualization option selection panel 806 may allow the user to select different data visualization options, for example a 2D visualization or a 3D visualization. The visualization representation panel 808 may display the flight segment data based on the view option selected in view selection panel 804 and visualization option selected in the visualization option selection panel 806. For example, a 2D visualization of the take off segment of the flight may be displayed in panel 808. The visualization may display the aircraft altitude over a period of time during the take off segment of the flight. Icons or other representations of events occurring during the segment may also be displayed in panel 808. Parameter details panel 810 may disclose the parameter data related to the view option selected in view selection panel 804. For example, runway information, aircraft configuration information and other parameters may be displayed related to the take off segment of the flight. The events panel 812 may display events occurred during the selected flight segment and the pilot performance rating for those events. For example, during the take off segment of the flight the pitch rate performance received a rating of 88, the rate of climb performance received a rating of 88, and the gear retraction performance received a rating of 88.

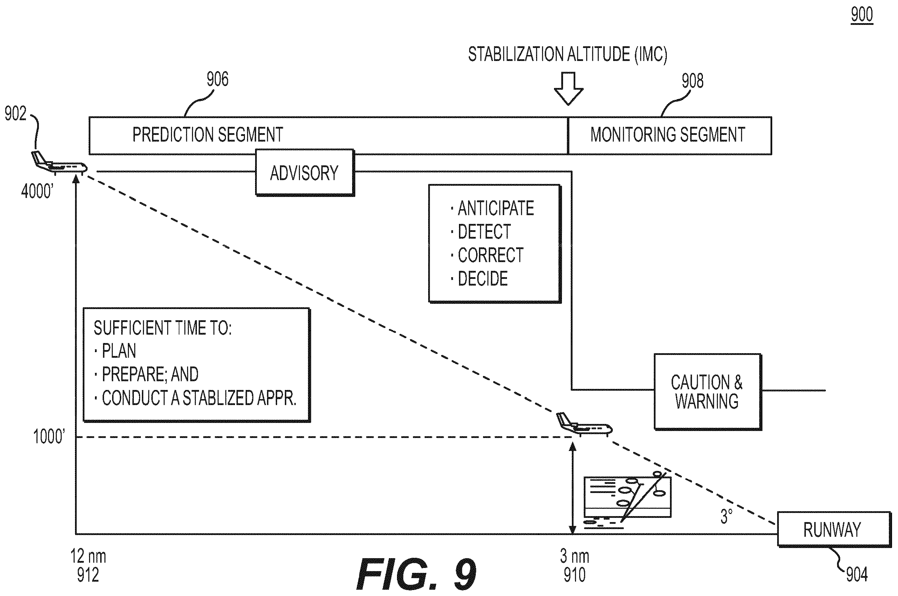

FIG. 9 is a diagram 900 of aircraft approach segments suitable for applying a contextual model to obtain stability advisories, in accordance with the disclosed embodiments. Diagram 900 may include the aircraft 902, the prediction segment 906, the monitoring segment 908, the runway representation 904, and approach distance markers 910 and 912. Diagram 900 may represent aircraft 902 at the beginning of the approach segment at distance marker 912, between distance marker 912 and 910 may be presented as the prediction segment 906. The prediction segment 906 may be used to anticipate any potential events, detect any occurrence of events, correct any occurred events, and decide on approach. The prediction segment 906 may also provide sufficient time to plan, prepare and conduct a stabilized approach. As the aircraft 902 approaches distance marker 910, the aircraft 902 may reach stabilization altitude(IMC). Once the aircraft 902 passes the stabilization altitude, the aircraft 902 enters the monitoring segment, where the stabilization of the aircraft approach is monitored, and caution and warning displays may be presented to the crew if necessary.

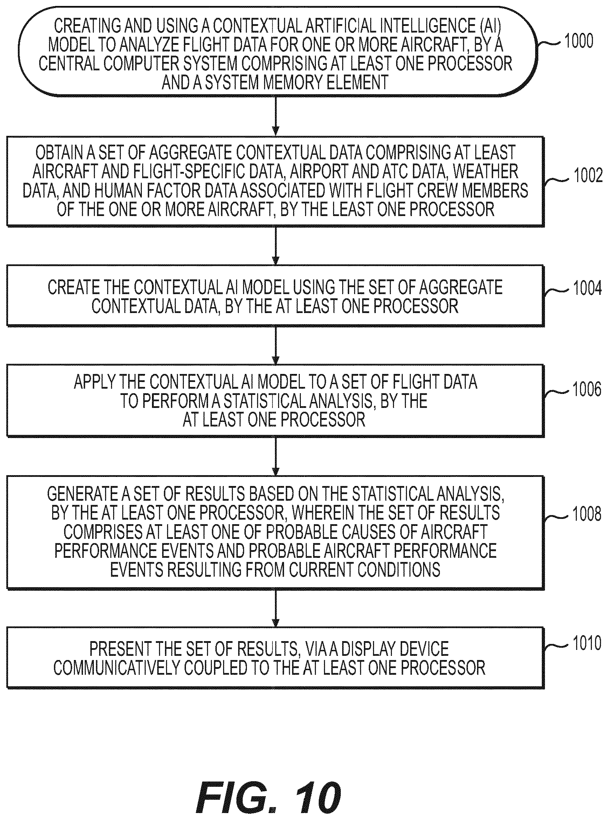

FIG. 10 is a flow chart that illustrates an embodiment of a process 1000 for creating and using a contextual artificial intelligence (AI) model to analyze flight data for one or more aircraft, in accordance with the disclosed embodiments. The process 1000 obtains a set of aggregate contextual data comprising at least aircraft and flight-specific data, airport and air traffic control (ATC) data, weather data, and human factor data associated with flight crew members of the one or more aircraft, by the at least one processor (step 1002). The process 1000 creates the contextual AI model using the set of aggregate contextual data, by the at least one processor (step 1004). The process 1000 applies the contextual AI model to a set of flight data, to perform a statistical analysis, by the at least one processor (step1006). The process 1000 generates a set of results based on the statistical analysis, by the at least one processor, wherein the set of results comprises at least one of probable causes of aircraft performance events and probable aircraft performance events resulting from current conditions (step 1008). The process 1000 presents the set of results, via a display device communicatively coupled to the at least one processor (step 1010). This enables improved planning in current conditions to adapt to current predicted performance events, in aircraft operation.

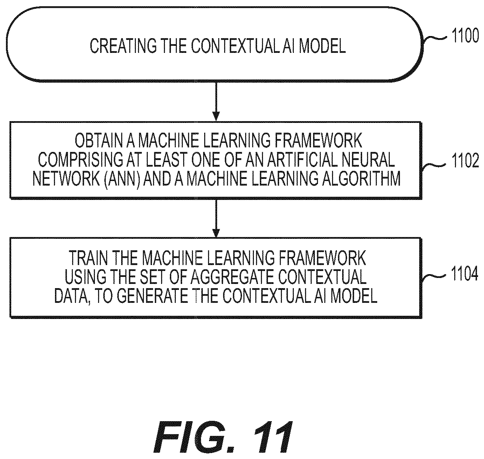

FIG. 11 is a flow chart that illustrates an embodiment of a process 1100 for creating a contextual artificial intelligence (AI) model, in accordance with the disclosed embodiments. The process 1100 obtains a machine learning framework, wherein the machine learning framework comprises at least one of an artificial neural network (ANN) and machine learning algorithms (step 1102). The process 1100 trains the machine learning framework using the set of aggregate contextual data, to generate the contextual AI model (step 1104). After the contextual AI model is created, applying the contextual AI model to the set of flight data further comprises using the trained machine learning framework including the set of aggregate contextual data, to perform the statistical analysis.

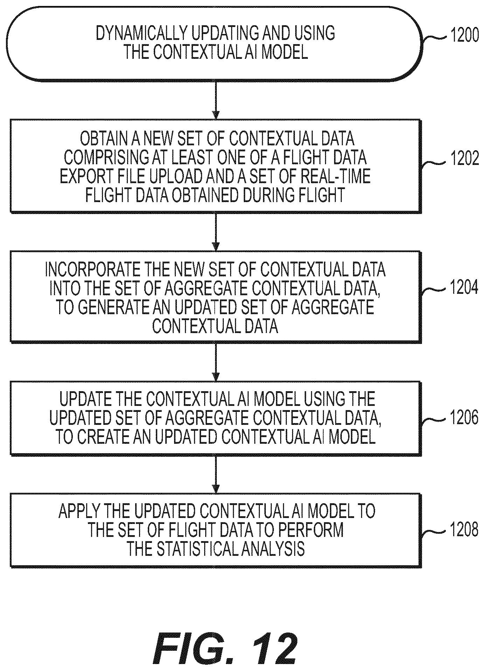

FIG. 12 is a flow chart that illustrates an embodiment of a process 1200 for dynamically updating and using a contextual artificial intelligence (AI) model, in accordance with the disclosed embodiments. The process 1200 obtains a new set of contextual data comprising at least one of a flight data export file upload and a set of real-time flight data obtained during flight, by the at least one processor (step 1202). The process 1200 incorporates the new set of contextual data into the set of aggregate contextual data, to generate an updated set of aggregate contextual data (step 1204). The process 1200 updates the contextual AI model using the updated set of aggregate contextual data, to create an updated contextual AI model (step 1206). The process 1200 applies the updated contextual AI model to the set of flight data to perform the statistical analysis (step 1208).

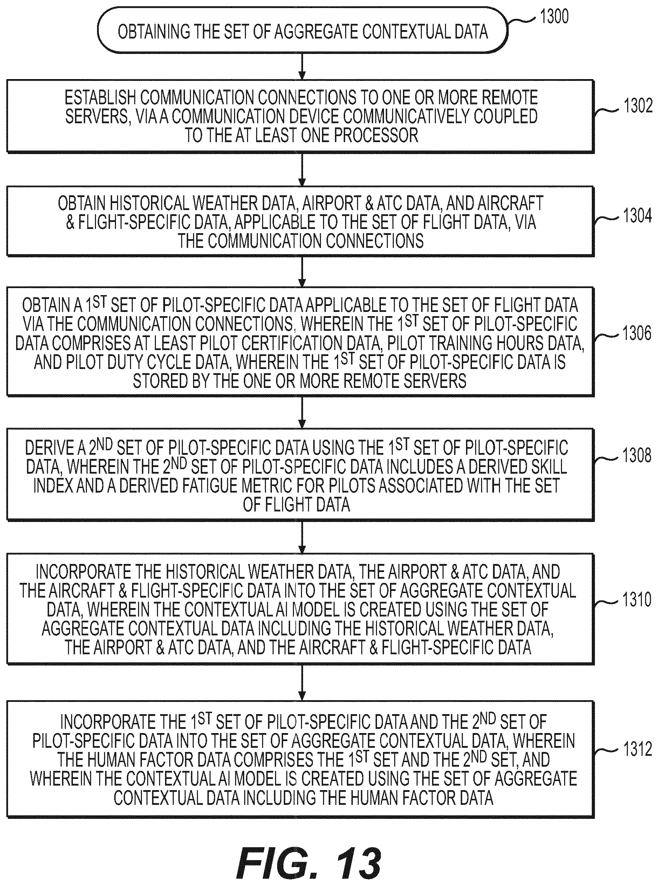

FIG. 13 is a flow chart that illustrates an embodiment of a process 1300 for obtaining a set of aggregate contextual data for use as part of a contextual artificial intelligence (AI) model, in accordance with the disclosed embodiments.

The process 1300 establishes communication connections to one or more remote servers, via the communication device (step 1302).

The process 1300 obtains historical weather data, the airport and air traffic control (ATC) data, and the aircraft and flight-specific data, applicable to the set of flight data via the communication connections (step 1304). Here, the historical weather data includes historical wind speeds, historical cloud cover conditions, historical visibility conditions, historical precipitation conditions, and historical temperature conditions associated with the set of flight data, wherein the weather data comprises at least the historical weather data, wherein the airport and ATC data includes at least Automatic Terminal Information Service (ATIS) data, airport specifications data, runway length data, airport arrival rate data, airport arrival taxi time data, and airport departure taxi time data, wherein the aircraft and flight-specific data includes at least flight state data from aircraft onboard recorders, flight plan data, aircraft condition data, condition-based maintenance (CBM) data, aircraft specification data, and Notices to Airmen (NOTAMs) data, and wherein the historical weather data, the airport and ATC data, and the aircraft and flight-specific data, are stored by the one or more remote servers.

The process 1300 obtains a first set of pilot-specific data applicable to the set of flight data via the communication connections, wherein the first set of pilot-specific data comprises at least pilot certification data, pilot training hours data, and pilot duty cycle data, and wherein the first set of pilot-specific data is stored by the one or more remote servers (step 1306). The process 1300 derives a second set of pilot-specific data using the first set of pilot-specific data, wherein the second set of pilot-specific data includes a derived skill index and a derived fatigue metric for pilots associated with the set of flight data (step 1308). The process 1300 incorporates the historical weather data, the airport and ATC data, and the aircraft and flight-specific data, into the set of aggregate contextual data, wherein the contextual AI model is created using the set of aggregate contextual data including the historical weather data, the airport and ATC data, and the aircraft and flight-specific data (step 1310). The process 1300 incorporates the first set of pilot-specific data and the second set of pilot-specific data into the set of aggregate contextual data, wherein the human factor data comprises the first set of pilot-specific data and the second set of pilot-specific data, and wherein the contextual AI model is created using the set of aggregate contextual data including the human factor data (step 1312).

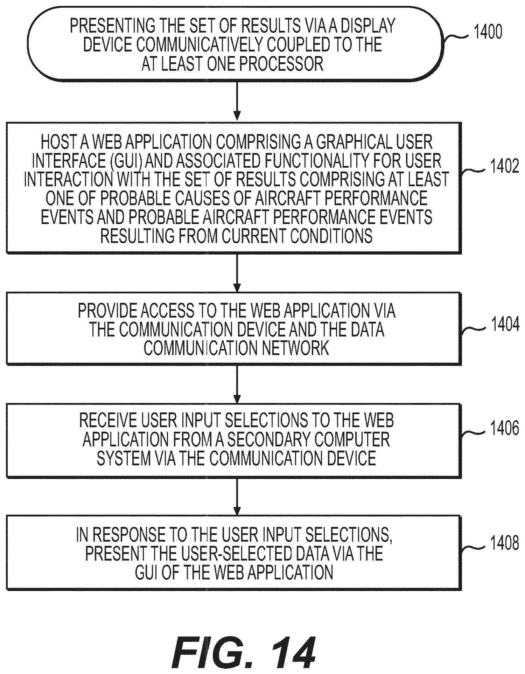

FIG. 14 is a flow chart that illustrates an embodiment of a process 1400 for presenting the set of results via a display device, in accordance with the disclosed embodiments. The process 1400 hosts a web application comprising a graphical user interface (GUI) and associated functionality for user interaction with the set of results comprising at least one of probable causes of aircraft performance events and probable aircraft performance events resulting from current conditions (step 1402). This enables improved planning for performance events occurring during aircraft landings. The process 1400 provides access to the web application via the communication device and the data communication network (step 1404). The process 1400 receives user input selections to the web application from a secondary computer system via the communication device (step 1406). The process 1400, in response to the user input selections, presents the user-selected data via the GUI of the web application (step 1408).

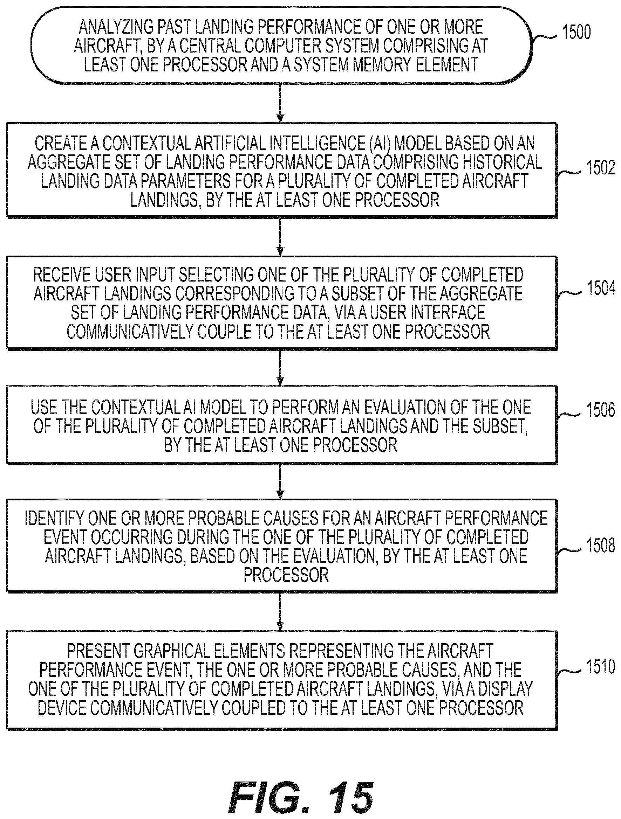

FIG. 15 is a flow chart that illustrates an embodiment of a process 1500 for analyzing past landing performance of one or more aircraft, by a central computer system, in accordance with the disclosed embodiments. The process 1500 creates a contextual Artificial Intelligence (AI) model based on an aggregate set of landing performance data comprising historical landing data parameters for a plurality of completed aircraft landings, by the at least one processor (step 1502). The process 1500 receives user input selecting one of the plurality of completed aircraft landings corresponding to a subset of the aggregate set of landing performance data, via a user interface communicatively coupled to the at least one processor (step 1504). The process 1500 uses the contextual AI model to perform an evaluation of the one of the plurality of completed aircraft landings and the subset, by the at least one processor (step 1506). The process 1500 identifies one or more probable causes for an aircraft performance event occurring during the one of the plurality of completed aircraft landings, based on the evaluation, by the at least one processor (step 1508). The process 1500 presents graphical elements representing the aircraft performance event, the one or more probable causes, and the one of the plurality of completed aircraft landings, via a display device communicatively coupled to the at least one processor (step 1510).

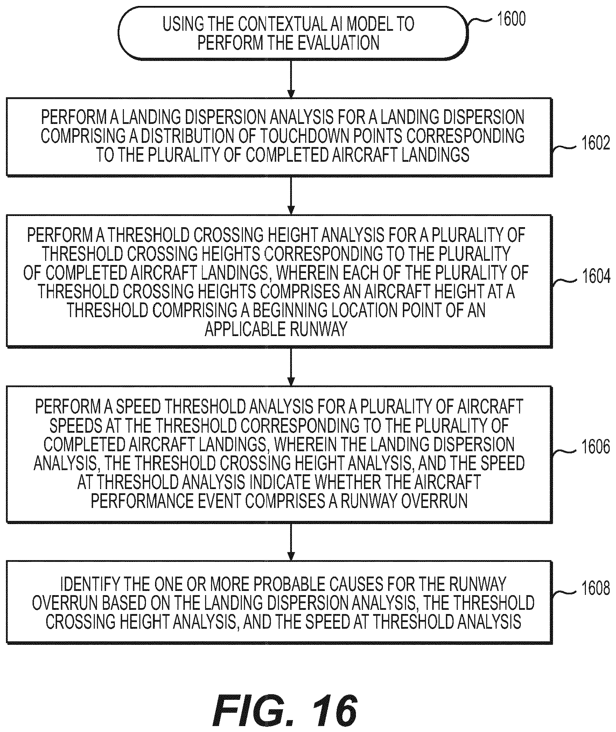

FIG. 16 is a flow chart that illustrates an embodiment of a process 1600 for using a contextual artificial intelligence (AI) model to perform an evaluation of past landing performance of one or more aircraft, in accordance with the disclosed embodiments. The process 1600 performs a landing dispersion analysis for a landing dispersion comprising a distribution of touchdown points corresponding to the plurality of completed aircraft landings (step 1602). The process 1600 performs a threshold crossing height analysis for a plurality of threshold crossing heights corresponding to the plurality of completed aircraft landings, wherein each of the plurality of threshold crossing heights comprises an aircraft height at a threshold comprising a beginning location point of an applicable runway (step 1604). The process 1600 performs a speed at threshold analysis for a plurality of aircraft speeds at the threshold corresponding to the plurality of completed aircraft landings, wherein the landing dispersion analysis, the threshold crossing height analysis, and the speed at threshold analysis indicate whether the aircraft performance event comprises a runway overrun (step 1606). The process 1600 identifies the one or more probable causes for the runway overrun based on the landing dispersion analysis, the threshold crossing height analysis, and the speed at threshold analysis (step 1608).

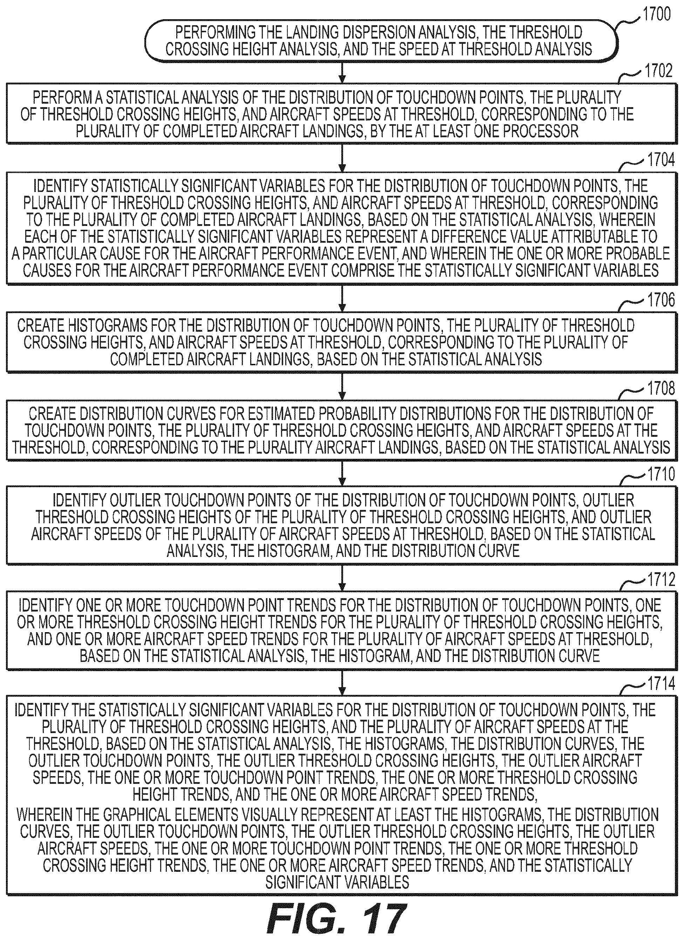

FIG. 17 is a flow chart that illustrates an embodiment of a process 1700 for performing a landing dispersion analysis, a threshold crossing height analysis, and a speed at threshold analysis, in accordance with the disclosed embodiments. The process 1700 performs a statistical analysis of the distribution of touchdown points, the plurality of threshold crossing heights, and aircraft speeds at the threshold, corresponding to the plurality of completed aircraft landings, by the at least one processor (step 1702). The process 1700 identifies statistically significant variables for the distribution of touchdown points, the plurality of threshold crossing heights, and aircraft speeds at the threshold, corresponding to the plurality of completed aircraft landings, based on the statistical analysis, wherein each of the statistically significant variables represent a difference value attributable to a particular cause for the aircraft performance event, and wherein the one or more probable causes for the aircraft performance event comprise the statistically significant variables, wherein the graphical elements visually represent at least the statistically significant variables (step 1704). The process 1700 creates histograms for the distribution of touchdown points, the plurality of threshold crossing heights, and aircraft speeds at the threshold, corresponding to the plurality of completed aircraft landings, based on the statistical analysis (step 1706). The process 1700 creates distribution curves for estimated probability distributions for the distribution of touchdown points, the plurality of threshold crossing heights, and aircraft speeds at the threshold, corresponding to the plurality of completed aircraft landings, based on the statistical analysis (step 1708). The process 1700 identifies outlier touchdown points of the distribution of touchdown points, outlier threshold crossing heights of the plurality of threshold crossing heights, and outlier aircraft speeds of the plurality of aircraft speeds at the threshold, based on the statistical analysis, the histogram, and the distribution curve (step 1710). The process 1700 identifies one or more touchdown point trends for the distribution of touchdown points, one or more threshold crossing height trends for the plurality of threshold crossing heights, and one or more aircraft speed trends for the plurality of aircraft speeds at the threshold, based on the statistical analysis, the histogram, and the distribution curve (step 1712). The process 1700 identifies the statistically significant variables for the distribution of touchdown points, the plurality of threshold crossing heights, and the plurality of aircraft speeds at the threshold, based on the statistical analysis, the histograms, the distribution curves, the outlier touchdown points, the outlier threshold crossing heights, the outlier aircraft speeds, the one or more touchdown point trends, the one or more threshold crossing height trends, and the one or more aircraft speed trends, wherein the graphical elements further visually represent at least the histograms, the distribution curves, the outlier touchdown points, the outlier threshold crossing heights, the outlier aircraft speeds, the one or more touchdown point trends, the one or more threshold crossing height trends, the one or more aircraft speed trends and the statistically significant variables (step 1714).

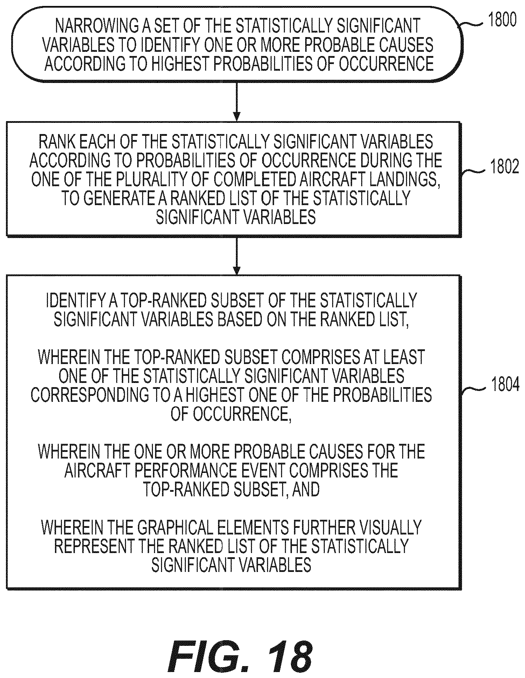

FIG. 18 is a flow chart that illustrates an embodiment of a process 1800 for narrowing a set of statistically significant variables to identify one or more probable causes according to highest probabilities of occurrence, in accordance with the disclosed embodiments. The process 1800 ranks each of the statistically significant variables according to probabilities of occurrence during the one of the plurality of completed aircraft landings, to generate a ranked list of the statistically significant variables (step 1802). The process 1800 identifies a top-ranked subset of the statistically significant variables, based on the ranked list, wherein the top-ranked subset comprises at least one of the statistically significant variables corresponding to a highest one of the probabilities of occurrence, and wherein the one or more probable causes for the aircraft performance event comprises the top-ranked subset, wherein the graphical elements further visually represent the ranked list of the statistically significant variables (step 1804).

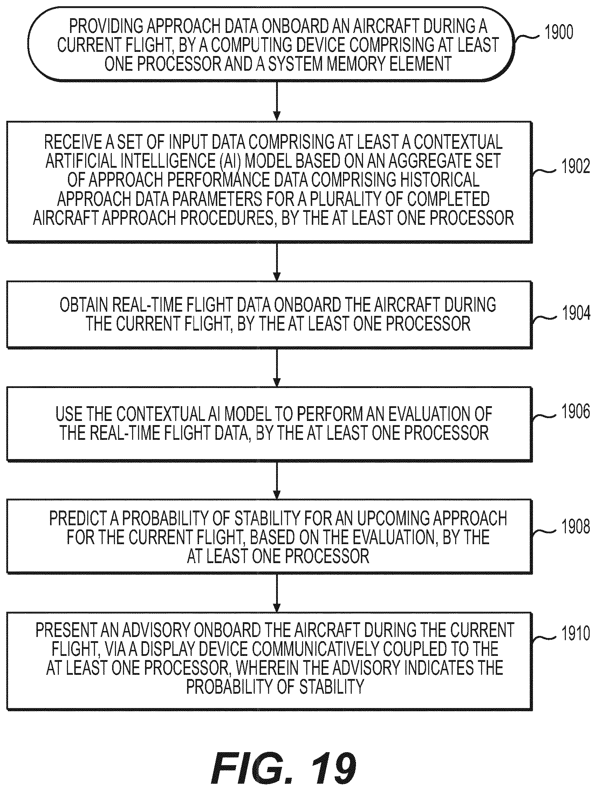

FIG. 19 is a flow chart that illustrates an embodiment of a process 1900 for providing approach data onboard an aircraft during a current flight, in accordance with the disclosed embodiments. The process 1900 receives a set of input data comprising at least a contextual Artificial Intelligence (AI) model based on an aggregate set of approach performance data comprising historical approach data parameters for a plurality of completed aircraft approach procedures, by the at least one processor (step 1902). The process 1900 obtains real-time flight data onboard the aircraft during the current flight, by the at least one processor (step 1904). The process 1900 uses the contextual AI model to perform an evaluation of the real-time flight data, by the at least one processor (step 1906). The process 1900 predicts a probability of stability for an upcoming approach for the current flight, based on the evaluation, by the at least one processor (step 1908). The process 1900 presents an advisory onboard the aircraft during the current flight, via a display device communicatively coupled to the at least one processor, wherein the advisory indicates the probability of stability (step 1910).

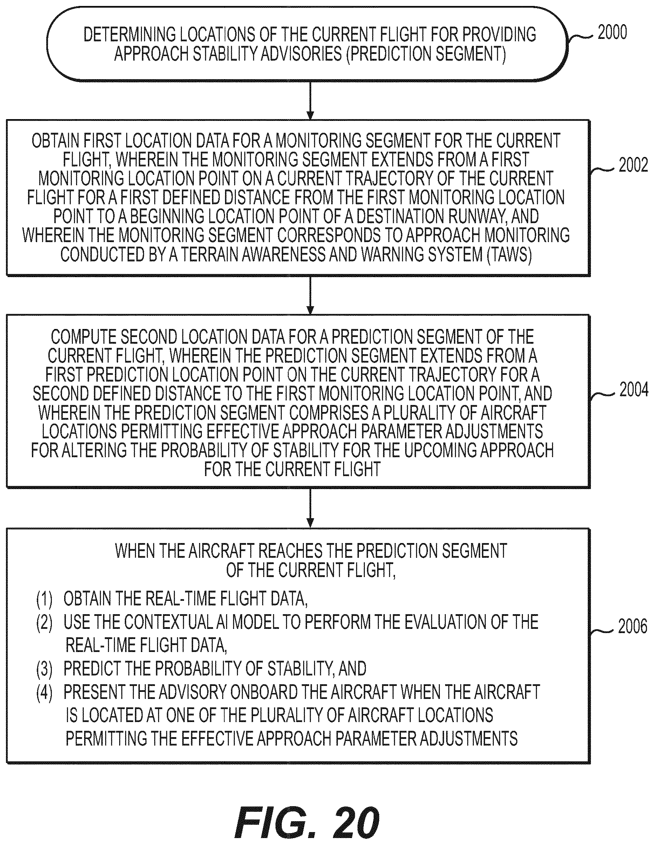

FIG. 20 is a flow chart that illustrates an embodiment of a process 2000 for determining locations of the current flight for providing approach stability advisories, in accordance with the disclosed embodiments. The process 2000 obtains first location data for a monitoring segment for the current flight, wherein the monitoring segment extends from a first monitoring location point on a current trajectory of the current flight for a first defined distance from the first monitoring location point to a beginning location point of a destination runway, and wherein the monitoring segment corresponds to approach monitoring conducted by a terrain awareness and warning system (TAWS) (step 2002). The process 2000 computes second location data for a prediction segment of the current flight, wherein the prediction segment extends from a first prediction location on the current trajectory for a second defined distance to the first monitoring location point, and wherein the prediction segment comprises a plurality of aircraft locations permitting effective approach parameter adjustments for altering the probability of stability for the upcoming approach for the current flight (step 2004). The process 2000, when the aircraft reaches the prediction segment of the current flight, obtains the real-time flight data; uses the contextual AI model to perform the evaluation of the real-time flight data; predicts the probability of stability; and presents the advisory onboard the aircraft when the aircraft is located at one of the plurality of aircraft locations permitting the effective approach parameter adjustments (step 2006).

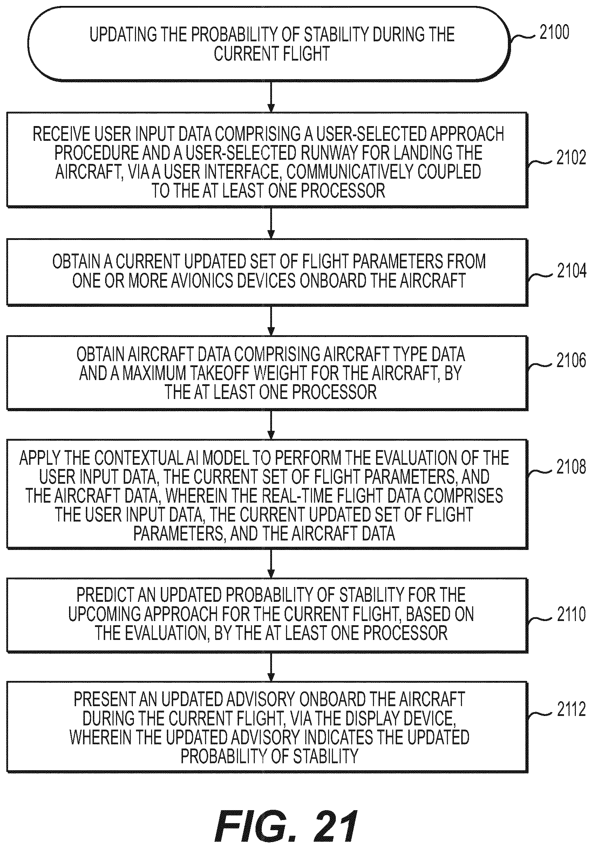

FIG. 21 is a flow chart that illustrates an embodiment of a process 2100 for updating the probability of stability during the current flight, in accordance with the disclosed embodiments. The process 2100 receives user input data comprising a user-selected approach procedure and a user-selected runway for landing the aircraft, via a user interface communicatively coupled to the at least one processor (step 2102). The process 2100 obtains a current updated set of flight parameters from one or more avionics devices onboard the aircraft (step 2104). The process 2100 obtains aircraft data comprising aircraft type data and a maximum takeoff weight for the aircraft, by the at least one processor (step 2106). The process 2100 applies the contextual AI model to perform the evaluation of the user input data, the current set of flight parameters, and the aircraft data, wherein the real-time flight data comprises the user input data, the current updated set of flight parameters, and the aircraft data (step 2108). The process 2100 predicts an updated probability of stability for the upcoming approach for the current flight, based on the evaluation, by the at least one processor (step 2110). The process 2100 presents an updated advisory onboard the aircraft during the current flight, via the display device, wherein the updated advisory indicates the updated probability of stability (step 2112).

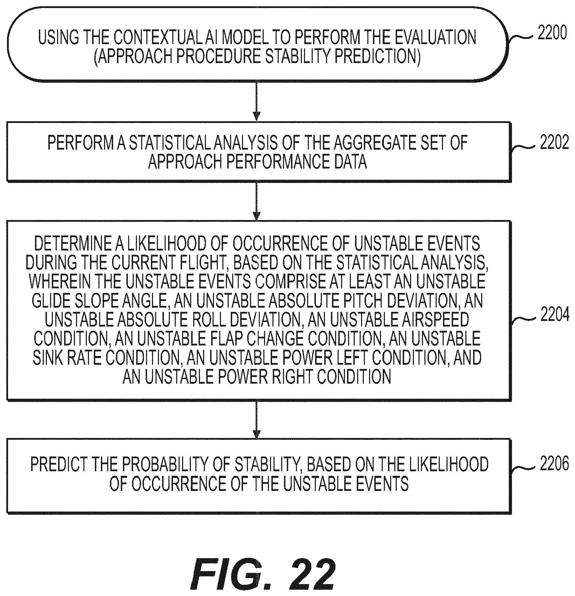

FIG. 22 is a flow chart that illustrates an embodiment of a process 2200 for using the contextual artificial intelligence (AI) model to perform an evaluation of approach procedure data, in accordance with the disclosed embodiments. The process 2200 performs a statistical analysis of the aggregate set of approach performance data (step 2202). The process 2200 determines a likelihood of occurrence of unstable events during the current flight, based on the statistical analysis, wherein the unstable events comprise at least an unstable glide slope angle, an unstable absolute pitch deviation, an unstable absolute roll deviation, an unstable airspeed condition, an unstable flap change condition, an unstable sink rate condition, an unstable power left condition, and an unstable power right condition (step 2204). The process 2200 predicts the probability of stability, based on the likelihood of occurrence of the unstable events (step 2206).

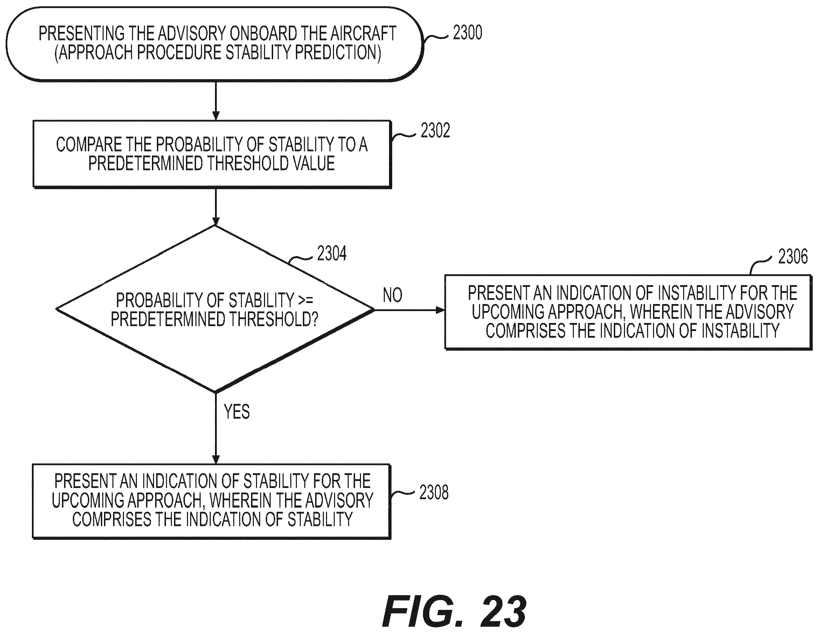

FIG. 23 is a flow chart that illustrates an embodiment of a process 2300 for presenting an advisory onboard an aircraft, including approach procedure stability predictions, in accordance with the disclosed embodiments. The process 2300 compares the probability of stability to a predetermined threshold value (step 2302). When the probability of stability is greater than or equal to the predetermined threshold (the "Yes" branch of 2304), the process 2300 presents an indication of stability for the upcoming approach, wherein the advisory comprises the indication of stability (step 2308). However, when the probability of stability is less than the predetermined threshold (the "No" branch of 2304), the process 2300 presents an indication of instability for the upcoming approach, wherein the advisory comprises the indication of stability (step 2306).

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematics shown in FIGS. 2-4 depict exemplary arrangements of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to be limiting. Rather, the foregoing detailed description will provide those skilled in the art with a convenient road map for implementing the described embodiment or embodiments. It should be understood that various changes can be made in the function and arrangement of elements without departing from the invention as defined by the claims, which may include known equivalents and foreseeable equivalents at the time of filing this patent application.

## Claims

1. A method (1500) for creating and using an Artificial Intelligence (AI) model to analyze past landing performance for one or more aircraft, by a central computer system comprising at least one processor and a system memory element, the method comprising:
creating (1502) the Al model based on an aggregate set of landing performance data comprising historical landing data parameters for a plurality of completed aircraft landings, by the at least one processor;
receiving (1504) user input selecting one of the plurality of completed aircraft landings corresponding to a subset of the aggregate set of landing performance data, via a user interface communicatively coupled to the at least one processor;
using (1506) the Al model to perform an evaluation of the one of the plurality of completed aircraft landings and the subset, by the at least one processor;
identifying (1508) one or more probable causes for an aircraft performance event occurring during the one of the plurality of completed aircraft landings, based on the evaluation, by the at least one processor; and
presenting (1510) graphical elements representing the aircraft performance event, the one or more probable causes, and the one of the plurality of completed aircraft landings, via a display device communicatively coupled to the at least one processor.

2. The method (1500) of Claim 1, wherein:
creating (1100) the Al model further comprises:
obtaining (1102) a machine learning framework, wherein the machine learning framework comprises at least one of an artificial neural network (ANN) or machine learning algorithms; and
training (1104) the machine learning framework using the aggregate set of landing performance data, to generate the Al model.

3. The method (1500) of Claim 1 or Claim 2, further comprising
dynamically updating (1200) and using the Al model, by:
obtaining (1202) a new set of contextual data comprising at least one of a flight data export file upload and a set of real-time flight data obtained during flight, by the at least one processor;
incorporating (1204) the new set of contextual data into the aggregate set of landing performance data, to generate an updated set of aggregate contextual data;
updating (1206) the Al model using the updated set of aggregate contextual data, to create an updated Al model; and
applying (1208) the updated Al model to the set of flight data to perform a statistical analysis.

4. The method (1500) of any of Claims 1 to 3, further comprising:
receiving user input identifying one or more airports and runways for performing a statistical analysis;
identifying a subset of flight data applicable to the one or more airports and runways;
applying the Al model to the subset of the flight data; and
generating a set of results based on the statistical analysis of the subset of the flight data.

5. The method (1500) of any of Claims 1 to 4, further comprising:
obtaining a set of aggregate contextual data by:
establishing (1302) communication connections to one or more remote servers, via a communication device communicatively coupled to the at least one processor of the central computer system;
obtaining (1304) historical weather data applicable to a set of flight data via the communication connections, wherein the historical weather data includes historical wind speeds, historical cloud cover conditions, historical visibility conditions, historical precipitation conditions, and historical temperature conditions associated with the set of flight data, wherein the historical weather data is stored by the one or more remote servers, and wherein the weather data comprises at least the historical weather data; and
incorporating (1310) the historical weather data into the set of aggregate contextual data, wherein the Al model is created using the set of aggregate contextual data including the historical weather data.

6. The method (1500) of any of Claims 1 to 5, further comprising:
obtaining a set of aggregate contextual data by:
establishing (1302) communication connections to one or more remote servers, via a communication device communicatively coupled to the at least one processor of the central computer system;
obtaining (1304) airport and air traffic control (ATC) data applicable to a set of flight data via the communication connections, wherein the airport and ATC data includes at least Automatic Terminal Information Service (ATIS) data, airport specifications data, runway length data, airport arrival rate data, airport arrival taxi time data, and airport departure taxi time data, and wherein the airport and ATC data is stored by the one or more remote servers; and
incorporating (1310) the airport and ATC data into the set of aggregate contextual data, wherein the Al model is created using the set of aggregate contextual data including the airport and ATC data.

7. The method (1500) of any of Claims 1 to 6, further comprising:
obtaining a set of aggregate contextual data by:
establishing (1302) communication connections to one or more remote servers, via a communication device communicatively coupled to the at least one processor of the central computer system;
obtaining (1304) the aircraft and flight-specific data applicable to the set of flight data via the communication connections, wherein the aircraft and flight-specific data includes at least flight state data from aircraft onboard recorders, flight plan data, aircraft condition data, condition-based maintenance (CBM) data, aircraft specification data, and Notices to Airmen (NOTAMs) data, and wherein the aircraft and flight-specific data is stored by the one or more remote servers; and
incorporating (1310) the aircraft and flight-specific data into the set of aggregate contextual data, wherein the Al model is created using the set of aggregate contextual data including the aircraft and flight-specific data.

8. The method (1500) of any of Claims 1 to 7, further comprising:
obtaining a set of aggregate contextual data by:
establishing (1302) communication connections to one or more remote servers, via a communication device communicatively coupled to the at least one processor of the central computer system;
obtaining (1306) a first set of pilot-specific data applicable to a set of flight data via the communication connections, wherein a human factor data comprises at least pilot certification data, pilot training hours data, and pilot duty cycle data, and wherein the human factor data is stored by the one or more remote servers;
deriving (1308) a second set of pilot-specific data using the first set of pilot-specific data, wherein the second set of pilot-specific data includes a derived skill index and a derived fatigue metric for pilots associated with the set of flight data; and
incorporating (1312) the human factor data into the set of aggregate contextual data, wherein the human factor data comprises the first set of pilot-specific data and the second set of pilot-specific data, and wherein the Al model is created using the set of aggregate contextual data including the human factor data.

9. A central computer system (200-400) for creating and using an Artificial Intelligence (AI) model to analyze past landing performance for one or more aircraft, the central computer system comprising:
a system memory element (204-404);
a communication device (206, 308, 408) configured to establish communication connections to one or more remote servers via a data communication network;
a display device (222, 314, 416) configured to present graphical elements and text; and
at least one processor (202-402) communicatively coupled to the system memory element, the communication device, and the display device, the at least one processor configured to:
create (1502) the Al model based on an aggregate set of landing performance data comprising historical landing data parameters for a plurality of completed aircraft landings;
receive (1504) user input selecting one of the plurality of completed aircraft landings corresponding to a subset of the aggregate set of landing performance data, via a user interface communicatively coupled to the at least one processor;
use (1506) the Al model to perform an evaluation of the one of the plurality of completed aircraft landings and the subset;
identify (1508) one or more probable causes for an aircraft performance event occurring during the one of the plurality of completed aircraft landings, based on the evaluation; and
present (1510) graphical elements representing the aircraft performance event, the one or more probable causes, and the one of the plurality of completed aircraft landings, via the display device.

10. The central computer system (200-400) of Claim 9,
wherein the at least one processor (202-402) is further configured to create the Al model, by:
incorporating a machine learning framework into the Al model, wherein the machine learning framework comprises at least one of an artificial neural network (ANN) or machine learning algorithms, to create the Al model; and
training the Al model using a set of aggregate contextual data and the machine learning framework, to generate a trained Al model.

11. The central computer system (200-400) of Claim 9 or Claim 10, wherein the at least one processor (202-402) is further configured to perform operations including:
dynamically updating and using the Al model, by:
obtaining a new set of contextual data comprising at least one of a flight data export file upload and a set of real-time flight data obtained during flight;
incorporating the new set of contextual data into the aggregate set of landing performance data, to generate an updated set of aggregate contextual data;
updating the Al model using the updated set of aggregate contextual data, to create an updated Al model; and
applying the updated Al model to the set of flight data to perform a statistical analysis.

12. The central computer system (200-400) of any of Claims 9 to 11, further comprising the user interface (206-406) communicatively coupled to the at least one processor (202-402), the user interface configured to receive user input data; wherein the at least one processor is further configured to:
receive user input identifying one or more airports and runways for performing a statistical analysis, via the user interface;
identify a subset of flight data applicable to the one or more airports and runways;
apply the Al model to the subset of the flight data; and
generate a set of results based on the statistical analysis of the subset of the flight data.

13. The central computer system (200-400) of any of Claims 9 to 12, wherein the at least one processor (202-402) is further configured to:
format a set of results for presentation via one or more secondary computing devices external to the central computer system, wherein the one or more secondary computing devices comprises at least one of an aircraft onboard avionics device and a personal computing device configured to store, maintain, and execute an Electronic Flight Bag (EFB) application; and
transmit the set of results to the one or more secondary computing devices, via the communication device (206, 308, 408).

14. The central computer system (200-400) of any of Claims 9 to 13, wherein the at least one processor (202-402) is further configured to:
host a web application comprising a graphical user interface (GUI) and associated functionality for user interaction with a set of results;
provide access to the web application via the communication device (206, 308, 408) and the data communication network;
receive user input selections to the web application from a secondary computer system via the communication device; and
in response to the user input selections, present the user-selected data via the GUI of the web application.

15. The central computer system (200-400) of any of Claims 9 to 14, wherein the at least one processor (202-402) is further configured to obtain a set of aggregate contextual data, by:
establishing communication connections to one or more remote servers, via the communication device (206, 308, 408);
obtaining historical weather data, airport and air traffic control (ATC) data, and the aircraft and flight-specific data, applicable to the set of flight data via the communication connections, wherein the historical weather data includes historical wind speeds, historical cloud cover conditions, historical visibility conditions, historical precipitation conditions, and historical temperature conditions associated with the set of flight data, wherein the weather data comprises at least the historical weather data, wherein the airport and ATC data includes at least Automatic Terminal Information Service (ATIS) data, airport specifications data, runway length data, airport arrival rate data, airport arrival taxi time data, and airport departure taxi time data, wherein the aircraft and flight-specific data includes at least flight state data from aircraft onboard recorders, flight plan data, aircraft condition data, condition based maintenance (CBM) data, aircraft specification data, and Notices to Airmen (NOTAMs) data, and wherein the historical weather data, the airport and ATC data, and the aircraft and flight-specific data, are stored by the one or more remote servers; and
incorporating the historical weather data, the airport and ATC data, and the aircraft and flight-specific data, into the set of aggregate contextual data, wherein the AI model is created using the set of aggregate contextual data including the historical weather data, the airport and ATC data, and the aircraft and flight specific data.

16. The central computer system (200-400) of any of Claims 9 to 15, wherein the at least one processor (202-402) is further configured to obtain a set of aggregate contextual data, by:
establishing communication connections to one or more remote servers, via the communication device (206, 308, 408);
obtaining a first set of pilot-specific data applicable to a set of flight data via the communication connections, wherein the first set of pilot-specific data comprises at least pilot certification data, pilot training hours data, and pilot duty cycle data, and wherein the first set of pilot-specific data is stored by the one or more remote servers;
deriving a second set of pilot-specific data using the first set of pilot-specific data, wherein the second set of pilot-specific data includes a derived skill index and a derived fatigue metric for pilots associated with the set of flight data; and
incorporating the first set of pilot-specific data and the second set of pilot specific data into the set of aggregate contextual data, wherein human factor data comprises the first set of pilot-specific data and the second set of pilot-specific data, and wherein the AI model is created using the set of aggregate contextual data including the human factor data.

17. A non-transitory, computer-readable medium containing instructions thereon, which, when executed by a processor, perform a method as defined in any of claims 1 to 8.

## Patentansprüche

1. Verfahren (1500) zum Erstellen und Verwenden eines Künstliche-Intelligenz-(Kl-)Modells, um eine zurückliegende Landungsleistung für ein oder mehrere Flugzeuge zu analysieren, durch ein zentrales Computersystem, das mindestens einen Prozessor und ein Systemspeicherelement umfasst, das Verfahren umfassend:
Erstellen (1502), durch den mindestens einen Prozessor, des KI-Modells auf Basis eines aggregierten Satzes von Landungsleistungsdaten, umfassend historische Landungsleistungsdatenparameter für eine Vielzahl von abgeschlossenen Flugzeuglandungen;
Empfangen (1504), über eine Benutzerschnittstelle, die kommunikativ mit dem mindestens einen Prozessor gekoppelt ist, einer Benutzereingabe, die eine von der Vielzahl von abgeschlossenen Flugzeuglandungen entsprechend einem Untersatz von dem aggregierten Satz von Landungsleistungsdaten auswählt;
Verwenden (1506), durch den mindestens einen Prozessor, des KI-Modells, um eine Bewertung der einen von der Vielzahl von abgeschlossenen Flugzeuglandungen und des Untersatzes durchzuführen;
Identifizieren (1508), durch den mindestens einen Prozessor, einer oder mehrerer wahrscheinlichen Ursachen für ein Flugzeugleistungsereignis, das während der einen der Vielzahl von abgeschlossenen Flugzeuglandungen auftritt, auf Basis der Bewertung; und
Darstellen (1510) von graphischen Elementen, die das Flugzeugleistungsereignis wiedergeben, der einen oder der mehreren wahrscheinlichen Ursachen und der einen von der Vielzahl von abgeschlossenen Flugzeuglandungen, über eine Anzeigevorrichtung, die kommunikativ mit dem mindestens einen Prozessor gekoppelt ist.

2. Verfahren (1500) nach Anspruch 1, wobei:
das Erstellen (1100) des Kl-Modells ferner Folgendes umfasst:
Erhalten (1102) eines Maschinenlernen-Frameworks, wobei das Maschinenlernen-Framework mindestens eines von einem künstlichen neuronalen Netzwerk (ANN) oder von Maschinenlernen-Algorithmen umfasst; und Trainieren (1104) des Maschinenlernen-Frameworks unter Verwendung des aggregierten Satzes von Landungsleistungsdaten, um das KI-Modell zu erzeugen.

3. Verfahren (1500) nach Anspruch 1 oder Anspruch 2, ferner umfassend dynamisches Aktualisieren (1200) und Verwenden des Kl-Modells, durch:
Erhalten (1202), durch den mindestens einen Prozessor, eines neuen Satzes von Kontextdaten, umfassend mindestens eines von einem Flugdaten-Exportdatei-Upload und einem Satz von während des Fluges erhaltenen Echtzeitflugdaten;
Integrieren (1204) des neuen Satzes von Kontextdaten in den aggregierten Satz von Landungsleistungsdaten, um einen aktualisierten Satz von aggregierten Kontextdaten zu erzeugen;
Aktualisieren (1206) des Kl-Modells unter Verwendung des aktualisierten Satzes von aggregierten Kontextdaten, um ein aktualisiertes KI-Modell zu erstellen; und
Anwenden (1208) des aktualisierten Kl-Modells auf den Satz von Flugdaten, um eine statistische Analyse durchzuführen.

4. Verfahren (1500) nach einem der Ansprüche 1 bis 3, ferner umfassend:
Empfangen einer Benutzereingabe, die einen oder mehrere Flughäfen und Rollbahnen identifiziert, um eine statistische Analyse durchzuführen;
Identifizieren eines Untersatzes von Flugdaten, der auf den einen oder die mehreren Flughäfen und Rollbahnen anwendbar ist;
Anwenden des KI-Modells auf den Untersatz der Flugdaten; und
Erzeugen eines Satzes von Ergebnissen auf Basis der statistischen Analyse des Untersatzes der Flugdaten.

5. Verfahren (1500) nach einem der Ansprüche 1 bis 4, ferner umfassend:
Erhalten eines Satzes von aggregierten Kontextdaten durch:
Einrichten (1302) von Kommunikationsverbindungen zu einem oder mehreren entfernten Servern über eine Kommunikationsvorrichtung, die kommunikativ mit dem mindestens einen Prozessor des zentralen Computersystems gekoppelt ist;
Erhalten (1304) von historischen Wetterdaten, die auf einen Satz von Flugdaten anwendbar sind, über die Kommunikationsverbindungen, wobei die historischen Wetterdaten dem Satz von Flugdaten zugehörige historische Windgeschwindigkeiten, historische Wolkendeckenbedingungen, historische Sichtbedingungen, historische Niederschlagsbedingungen und historische Temperaturbedingungen beinhalten, wobei die historischen Wetterdaten durch den einen oder die mehreren entfernten Server gespeichert werden, und wobei die Wetterdaten mindestens die historischen Wetterdaten umfassen; und
Integrieren (1310) der historischen Wetterdaten in den Satz von aggregierten Kontextdaten, wobei das Kl-Modell unter Verwendung des Satzes von aggregierten Kontextdaten, die die historischen Wetterdaten beinhalten, erstellt wird.

6. Verfahren (1500) nach einem der Ansprüche 1 bis 5, ferner umfassend:
Erhalten eines Satzes von aggregierten Kontextdaten durch:
Einrichten (1302) von Kommunikationsverbindungen zu einem oder mehreren entfernten Servern über eine Kommunikationsvorrichtung, die kommunikativ mit dem mindestens einen Prozessor des zentralen Computersystems gekoppelt ist;
Erhalten (1304) von Flughafen- und Flugverkehrskontroll-(ATC-)Daten, die anwendbar auf einen Satz von Flugdaten sind, über die Kommunikationsverbindungen, wobei die Flughafen- und ATC-Daten mindestens Automatischer-Terminal-Informationsdienst-(ATIS-)Daten, Flughafenspezifikationsdaten, Rollbahnlängendaten, Flughafenankunftsraten-Daten, Flughafenankunftrollzeit-Daten und Flughafenabflugrollzeit-Daten beinhalten, und wobei die Flughafen- und ATC-Daten von dem einen oder den mehreren entfernten Server gespeichert werden; und
Integrieren (1310) der Flughafen- und ATC-Daten in den Satz von aggregierten Kontextdaten, wobei das Kl-Modell unter Verwendung des Satzes von aggregierten Kontextdaten, die die Flughafen- und ATC-Daten beinhalten, erstellt wird.

7. Verfahren (1500) nach einem der Ansprüche 1 bis 6, ferner umfassend:
Erhalten eines Satzes von aggregierten Kontextdaten durch:
Einrichten (1302) von Kommunikationsverbindungen zu einem oder mehreren entfernten Servern über eine Kommunikationsvorrichtung, die kommunikativ mit dem mindestens einen Prozessor des zentralen Computersystems gekoppelt ist;
Erhalten (1304) der flugzeug- und flugspezifischen Daten, die anwendbar auf den Satz von Flugdaten sind, über die Kommunikationsverbindungen, wobei die flugzeug- und flugspezifischen Daten mindestens Flugstatusdaten von bordeigenen Flugzeugrecordern, Flugplandaten, Flugzeugzustandsdaten, Daten der zustandsbasierten Wartung (CBM), Flugzeugspezifikationsdaten und Mitteilungen-an-den-Flugzeugführer-(NOTAM-)Daten beinhalten, und wobei die flugzeug- und flugspezifischen Daten von dem einen oder den mehreren entfernten Server gespeichert werden; und
Integrieren (1310) der flugzeug- und flugspezifischen Daten in den Satz von aggregierten Kontextdaten, wobei das KI-Modell unter Verwendung des Satzes von aggregierten Kontextdaten, die die flugzeug- und flugspezifischen Daten beinhalten, erstellt wird.

8. Verfahren (1500) nach einem der Ansprüche 1 bis 7, ferner umfassend:
Erhalten eines Satzes von aggregierten Kontextdaten durch:
Einrichten (1302) von Kommunikationsverbindungen zu einem oder mehreren entfernten Servern über eine Kommunikationsvorrichtung, die kommunikativ mit dem mindestens einen Prozessor des zentralen Computersystems gekoppelt ist;
Erhalten (1306), über die Kommunikationsverbindungen, eines ersten Satzes von pilotenspezifischen Daten, die anwendbar auf einen Satz von Flugdaten sind, wobei Daten zum menschlichen Faktor mindestens Pilotenzertifizierungs-Daten, Pilotentrainingsstunden-Daten und Pilotenarbeitsbelastungs-Daten umfassen, und wobei die Daten zum menschlichen Faktor von dem einen oder den mehreren entfernten Servern gespeichert werden;
Ableiten (1308) eines zweiten Satzes von pilotenspezifischen Daten unter Verwendung des ersten Satzes von pilotenspezifischen Daten, wobei der zweite Satz von pilotenspezifischen Daten einen abgeleiteten Fähigkeitenindex und eine abgeleitete Müdigkeitsmetrik für Piloten, die dem Satz von Flugdaten zugehörig sind, beinhaltet; und
Integrieren (1312) der Daten zum menschlichen Faktor in den Satz von aggregierten Kontextdaten, wobei die Daten zum menschlichen Faktor den ersten Satz von pilotenspezifischen Daten und den zweiten Satz von pilotenspezifischen Daten umfassen, und wobei das KI-Modell unter Verwendung des Satzes von aggregierten Kontextdaten erstellt wird, der die Daten zum menschlichen Faktor beinhaltet.

9. Zentrales Computersystem (200-400) zum Erstellen und Verwenden eines Künstliche-Intelligenz-(KI-)Modells, um eine zurückliegende Landungsleistung für ein oder mehrere Flugzeuge zu analysieren, das zentrale Computersystem umfassend:
ein Systemspeicherelement (204-404);
eine Kommunikationsvorrichtung (206, 308, 408), die dazu konfiguriert ist, Kommunikationsverbindungen zu einem oder mehreren entfernten Servern über ein Datenkommunikationsnetzwerk einzurichten;
eine Anzeigevorrichtung (222, 314, 416), die dazu konfiguriert ist, graphische Elemente und Text darzustellen; und
mindestens einen Prozessor (202-402), der kommunikativ mit dem Systemspeicherelement, der Kommunikationsvorrichtung und der Anzeigevorrichtung gekoppelt ist, wobei der mindestens eine Prozessor dazu konfiguriert ist:
das KI-Modell auf Basis eines aggregierten Satzes von Landungsleistungsdaten zu erstellen (1502), umfassend historische Landungsdatenparameter für eine Vielzahl von abgeschlossenen Flugzeuglandungen;
eine Benutzereingabe zu empfangen (1504), die eine der Vielzahl von abgeschlossenen Flugzeuglandungen entsprechend einem Untersatz von dem aggregierten Satz von Landungsleistungsdaten auswählt, über eine Benutzerschnittstelle, die kommunikativ mit dem mindestens einen Prozessor gekoppelt ist;
das KI-Modell zu verwenden (1506), um eine Bewertung der einen der Vielzahl von abgeschlossenen Flugzeuglandungen und des Untersatzes durchzuführen;
auf Basis der Bewertung eine oder mehrere wahrscheinliche Ursachen für ein Flugzeugleistungsereignis zu identifizieren (1508), das während der einen der Vielzahl von abgeschlossenen Flugzeuglandungen auftritt; und
graphische Elemente, die das Flugzeugleistungsereignis wiedergeben, die eine oder die mehreren wahrscheinlichen Ursachen und die eine der Vielzahl von abgeschlossenen Flugzeuglandungen über eine Anzeigevorrichtung darzustellen (1510), die kommunikativ mit dem mindestens einen Prozessor gekoppelt ist.

10. Zentrales Computersystem (200-400) nach Anspruch 9,
wobei der mindestens eine Prozessor (202-402) ferner dazu konfiguriert ist, das Kl-Modell durch Folgendes zu erstellen:
Integrieren eines Maschinenlernen-Frameworks in das Kl-Modell, wobei das Maschinenlernen-Framework mindestens eines von einem künstlichen neuronalen Netzwerk (ANN) oder von Maschinenlernen-Algorithmen umfasst, um das KI-Modell zu erstellen; und
Trainieren des KI-Modells unter Verwendung eines Satzes von aggregierten Kontextdaten und des Maschinenlernen-Frameworks, um ein trainiertes Kl-Modell zu erzeugen.

11. Zentrales Computersystem (200-400) nach Anspruch 9 oder Anspruch 10, wobei der mindestens eine Prozessor (202-402) ferner dazu konfiguriert ist, Arbeitsprozesse durchzuführen, beinhaltend:
dynamisches Aktualisieren und Verwenden des KI-Modells, durch:
Erhalten eines neuen Satzes von Kontextdaten, umfassend mindestens eines von einem Flugdaten-Exportdatei-Upload und einem Satz von während des Fluges erhaltenen Echtzeitflugdaten;
Integrieren des neuen Satzes von Kontextdaten in den aggregierten Satz von Landungsleistungsdaten, um einen aktualisierten Satz von aggregierten Kontextdaten zu erzeugen;
Aktualisieren des Kl-Modells unter Verwendung des aktualisierten Satzes von aggregierten Kontextdaten, um ein aktualisiertes Kl-Modell zu erstellen; und
Anwenden des aktualisierten Kl-Modells auf den Satz von Flugdaten, um eine statistische Analyse durchzuführen.

12. Zentrales Computersystem (200-400) nach einem der Ansprüche 9 bis 11, ferner umfassend die Benutzerschnittstelle (206-406), die kommunikativ mit dem mindestens einen Prozessor (202-402) gekoppelt ist, wobei die Benutzerschnittstelle dazu konfiguriert ist, Benutzereingabedaten zu empfangen; wobei der mindestens eine Prozessor ferner dazu konfiguriert ist:
eine Benutzereingabe zu empfangen, die einen oder mehrere Flughäfen und Rollbahnen identifiziert, um über die Benutzerschnittstelle eine statistische Analyse durchzuführen;
einen Untersatz von Flugdaten zu identifizieren, der auf den einen oder die mehreren Flughäfen und Rollbahnen anwendbar ist;
das KI-Modell auf den Untersatz der Flugdaten anzuwenden; und
einen Satz von Ergebnissen auf Basis der statistischen Analyse des Untersatzes der Flugdaten zu erzeugen.

13. Zentrales Computersystem (200-400) nach einem der Ansprüche 9 bis 12, wobei der mindestens eine Prozessor (202-402) ferner dazu konfiguriert ist:
einen Satz von Ergebnissen zur Darstellung über eine oder mehrere sekundäre Rechenvorrichtungen, die extern zu dem zentralen Computersystem sind, zu formatieren, wobei die eine oder die mehreren sekundären Rechenvorrichtungen mindestens eines von einer bordeigenen Flugzeugavionikvorrichtung und einer persönlichen Rechenvorrichtung umfassen, das dazu konfiguriert ist, eine Electronic-Flight-Bag-(EFB-)Anwendung zu speichern, zu unterhalten und auszuführen; und
den Satz von Ergebnissen über die Kommunikationsvorrichtung (206, 308, 408) an die eine oder die mehreren sekundären Rechenvorrichtungen zu übertragen.

14. Zentrales Computersystem (200-400) nach einem der Ansprüche 9 bis 13, wobei der mindestens eine Prozessor (202-402) ferner dazu konfiguriert ist:
eine Web-Anwendung zu hosten, umfassend eine graphische Benutzerschnittstelle (GUI) und eine zugehörige Funktionalität für eine Benutzerinteraktion mit einem Satz von Ergebnissen;
über die Kommunikationsvorrichtung (206, 308, 408) und das Datenkommunikationsnetzwerk Zugriff auf die Web-Anwendung bereitzustellen;
Benutzereingabeauswahlen von einem sekundären Computersystem über die Kommunikationsvorrichtung an die Web-Anwendung zu empfangen; und
als Antwort auf die Benutzereingabeauswahlen die von dem Benutzer ausgewählten Daten über die GUI der Web-Anwendung darzustellen.

15. Zentrales Computersystem (200-400) nach einem der Ansprüche 9 bis 14, wobei der mindestens eine Prozessor (202-402) ferner dazu konfiguriert ist, durch Folgendes einen Satz von aggregierten Kontextdaten zu erhalten:
Einrichten von Kommunikationsverbindungen zu einem oder mehreren entfernten Servern über die Kommunikationsvorrichtung (206, 308, 408);
Erhalten von historischen Wetterdaten, Flughafen- und Flugverkehrskontroll-(ATC-)Daten und den flugzeug- und flugspezifischen Daten, die anwendbar auf den Satz von Flugdaten sind, über die Kommunikationsverbindungen, wobei die historischen Wetterdaten dem Satz von Flugdaten zugehörige historische Windgeschwindigkeiten, historische Wolkendeckenbedingungen, historische Sichtbedingungen, historische Niederschlagsbedingungen und historische Temperaturbedingungen beinhalten, wobei die Wetterdaten mindestens die historischen Wetterdaten umfassen, wobei die Flughafen- und ATC-Daten mindestens Automatischer-Terminal-Informationsdienst-(ATIS-)Daten, Flughafenspezifikationsdaten, Rollbahnlängendaten, Flughafenankunftsraten-Daten, Flughafenankunftrollzeit-Daten und Flughafenabflugrollzeit-Daten beinhalten und die flugzeug- und flugspezifischen Daten mindestens Flugstatusdaten von bordeigenen Flugzeugrecordern, Flugplandaten, Flugzeugzustandsdaten, Daten der zustandsbasierten Wartung (CBM), Flugzeugspezifikationsdaten und Mitteilungen-an-den-Flugzeugführer-(NOTAM-)Daten beinhalten, und wobei die historischen Wetterdaten, die Flughafen- und ATC-Daten und die flugzeug- und flugspezifischen Daten von dem einen oder den mehreren entfernten Server gespeichert werden; und
Integrieren der historischen Wetterdaten, der Flughafen- und ATC-Daten und der flugzeug- und flugspezifischen Daten in den Satz von aggregierten Kontextdaten, wobei das KI-Modell unter Verwendung des Satzes von aggregierten Kontextdaten erstellt wird, beinhaltend die historischen Wetterdaten, die Flughafen- und ATC-Daten und die flugzeug- und flugspezifischen Daten.

16. Zentrales Computersystem (200-400) nach einem der Ansprüche 9 bis 15, wobei der mindestens eine Prozessor (202-402) ferner dazu konfiguriert ist, durch Folgendes einen Satz von aggregierten Kontextdaten zu erhalten:
Einrichten von Kommunikationsverbindungen zu einem oder mehreren entfernten Servern über die Kommunikationsvorrichtung (206, 308, 408);
Erhalten eines ersten Satzes von pilotenspezifischen Daten, die anwendbar auf einen Satz von Flugdaten sind, über die Kommunikationsverbindungen, wobei der erste Satz von pilotenspezifischen Daten mindestens Pilotenzertifizierungs-Daten, Pilotentrainingsstunden-Daten und Pilotenarbeitsbelastungs-Daten umfassen, und wobei der erste Satz von pilotenspezifischen Daten von dem einen oder den mehreren entfernten Servern gespeichert wird;
Ableiten eines zweiten Satzes von pilotenspezifischen Daten unter Verwendung des ersten Satzes von pilotenspezifischen Daten, wobei der zweite Satz von pilotenspezifischen Daten einen abgeleiteten Fähigkeitenindex und eine abgeleitete Müdigkeitsmetrik für Piloten, die dem Satz von Flugdaten zugehörig sind, beinhaltet; und
Integrieren des ersten Satzes von pilotenspezifischen Daten und des zweiten Satzes von pilotenspezifischen Daten in den Satz von aggregierten Kontextdaten, wobei Daten zum menschlichen Faktor den ersten Satz von pilotenspezifischen Daten und den zweiten Satz von pilotenspezifischen Daten umfassen, und wobei das KI-Modell unter Verwendung des Satzes von aggregierten Kontextdaten erstellt wird, der die Daten zum menschlichen Faktor beinhaltet.

17. Nichttransitorisches computerlesbares Medium, das Anweisungen darauf enthält, die bei ihrer Ausführung durch einen Prozessor ein Verfahren wie in einem der Ansprüche 1 bis 8 definiert durchführen.

## Revendications

1. Procédé (1500) de création et d'utilisation d'un modèle d'Intelligence Artificielle (IA) destiné à analyser des performances d'atterrissage passées pour un ou plusieurs aéronefs, par un système informatique central comprenant au moins un processeur et un élément de mémoire système, le procédé comprenant :
la création (1502) du modèle d'IA sur la base d'un ensemble agrégé de données de performance d'atterrissage comprenant des paramètres de données historiques d'atterrissage pour une pluralité d'atterrissages d'aéronefs achevés, par ledit au moins un processeur ;
la réception (1504) d'une entrée utilisateur sélectionnant l'un de la pluralité d'atterrissages d'aéronefs achevés correspondant à un sous-ensemble de l'ensemble agrégé de données de performance d'atterrissage, via une interface utilisateur couplée de manière communicante audit au moins un processeur ;
l'utilisation (1506) du modèle d'IA pour mettre en œuvre une évaluation dudit un de la pluralité d'atterrissages d'aéronefs achevés et du sous-ensemble, par ledit au moins un processeur ;
l'identification (1508) d'une ou de plusieurs causes probables d'un événement de performance de l'aéronef survenant au cours dudit un de la pluralité d'atterrissages d'aéronefs achevés, sur la base de l'évaluation, par ledit au moins un processeur ; et
la présentation (1510) d'éléments graphiques représentant l'événement de performance de l'aéronef, lesdites une ou plusieurs causes probables, et ledit un de la pluralité d'atterrissages d'aéronefs achevés, via un dispositif d'affichage couplé de manière communicante audit au moins un processeur.

2. Procédé (1500) de la revendication 1, dans lequel :
la création (1100) du modèle d'IA comprend en outre :
l'obtention (1102) d'un cadre d'apprentissage automatique, dans lequel le cadre d'apprentissage automatique comprend au moins l'un parmi un réseau de neurones artificiels (ANN) ou des algorithmes d'apprentissage automatique ; et
l'entraînement (1104) du cadre d'apprentissage automatique à l'aide de l'ensemble agrégé de données de performance d'atterrissage, afin de générer le modèle d'IA.

3. Procédé (1500) de la revendication 1 ou la revendication 2, comprenant en outre
la mise à jour dynamique (1200) et l'utilisation du modèle d'IA, par :
l'obtention (1202) d'un nouvel ensemble de données contextuelles comprenant au moins l'un parmi un chargement de fichier d'exportation de données de vol et un ensemble de données de vol en temps réel obtenues pendant le vol, par ledit au moins un processeur ;
l'incorporation (1204) du nouvel ensemble de données contextuelles dans l'ensemble agrégé de données de performance d'atterrissage, afin de générer un ensemble mis à jour de données contextuelles agrégées ;
la mise à jour (1206) du modèle d'IA à l'aide de l'ensemble mis à jour de données contextuelles agrégées, afin de créer un modèle d'IA mis à jour ; et
l'application (1208) du modèle d'IA mis à jour à l'ensemble de données de vol afin de mettre en œuvre une analyse statistique.

4. Procédé (1500) de l'une quelconque des revendications 1 à 3, comprenant en outre :
la réception d'une entrée utilisateur identifiant un ou plusieurs aéroports et pistes pour mettre en œuvre une analyse statistique ;
l'identification d'un sous-ensemble de données de vol applicable auxdits un ou plusieurs aéroports et pistes ;
l'application du modèle d'IA audit sous-ensemble de données de vol ; et
la génération d'un ensemble de résultats sur la base de l'analyse statistique du sous-ensemble de données de vol.

5. Procédé (1500) de l'une quelconque des revendications 1 à 4, comprenant en outre :
l'obtention d'un ensemble de données contextuelles agrégées par :
l'établissement (1302) de connexions de communication avec un ou plusieurs serveurs distants, via un dispositif de communication couplé de manière communicante audit au moins un processeur du système informatique central ;
l'obtention (1304) de données météorologiques historiques applicables à un ensemble de données de vol via les connexions de communication, dans lesquelles les données météorologiques historiques incluent des vitesses de vent historiques, des conditions historiques de couverture nuageuse, des conditions historiques de visibilité, des conditions historiques de précipitations et des conditions historiques de température associées à l'ensemble de données de vol, dans lesquelles les données météorologiques historiques sont stockées par lesdits un ou plusieurs serveurs distants, et dans lesquelles les données météorologiques comprennent au moins les données météorologiques historiques ; et
l'incorporation (1310) des données météorologiques historiques dans l'ensemble de données contextuelles agrégées, dans lequel le modèle d'IA est créé à l'aide de l'ensemble de données contextuelles agrégées incluant les données météorologiques historiques.

6. Procédé (1500) de l'une quelconque des revendications 1 à 5, comprenant en outre :
l'obtention d'un ensemble de données contextuelles agrégées par :
l'établissement (1302) de connexions de communication avec un ou plusieurs serveurs distants, via un dispositif de communication couplé de manière communicante audit au moins un processeur du système informatique central ;
l'obtention (1304) de données d'aéroport et de contrôle du trafic aérien (ATC) applicables à un ensemble de données de vol via les connexions de communication, dans lesquelles les données d'aéroport et d'ATC incluent au moins des données du service d'information de vol d'aérodrome automatique (ATIS), des données de spécifications d'aéroport, des données de longueur de piste, des données de taux d'arrivée à l'aéroport, des données de temps de roulage à l'arrivée à l'aéroport et des données de temps de roulage au départ de l'aéroport, et dans lesquelles les données d'aéroport et d'ATC sont stockées par lesdits un ou plusieurs serveurs distants ; et
l'incorporation (1310) des données d'aéroport et d'ATC dans l'ensemble de données contextuelles agrégées, dans lequel le modèle d'IA est créé à l'aide de l'ensemble de données contextuelles agrégées incluant les données d'aéroport et d'ATC.

7. Procédé (1500) de l'une quelconque des revendications 1 à 6, comprenant en outre :
l'obtention d'un ensemble de données contextuelles agrégées par :
l'établissement (1302) de connexions de communication avec un ou plusieurs serveurs distants, via un dispositif de communication couplé de manière communicante audit au moins un processeur du système informatique central ;
l'obtention (1304) de données spécifiques à l'aéronef et au vol applicables à l'ensemble de données de vol via les connexions de communication, dans lesquelles les données spécifiques à l'aéronef et au vol incluent au moins des données d'état de vol provenant d'enregistreurs embarqués de l'aéronef, des données de plan de vol, des données d'état de l'aéronef, des données de maintenance basée sur l'état (CBM), des données de spécification de l'aéronef et des données de messages aux navigants aériens (NOTAMs), et dans lesquelles les données spécifiques à l'aéronef et au vol sont stockées par lesdits un ou plusieurs serveurs distants ; et
l'incorporation (1310) des données spécifiques à l'aéronef et au vol dans l'ensemble de données contextuelles agrégées, dans lequel le modèle d'IA est créé à l'aide de l'ensemble de données contextuelles agrégées incluant les données spécifiques à l'aéronef et au vol.

8. Procédé (1500) de l'une quelconque des revendications 1 à 7, comprenant en outre :
l'obtention d'un ensemble de données contextuelles agrégées par :
l'établissement (1302) de connexions de communication avec un ou plusieurs serveurs distants, via un dispositif de communication couplé de manière communicante audit au moins un processeur du système informatique central ;
l'obtention (1306) d'un premier ensemble de données spécifiques au pilote applicables à un ensemble de données de vol via les connexions de communication, dans lesquelles des données de facteurs humains comprennent au moins des données de certification du pilote, des données d'heures de formation du pilote et des données de cycle de service du pilote, et dans lesquelles les données de facteurs humains sont stockées par lesdits un ou plusieurs serveurs distants ;
la dérivation (1308) d'un deuxième ensemble de données spécifiques au pilote à l'aide du premier ensemble de données spécifiques au pilote, dans lequel le deuxième ensemble de données spécifiques au pilote inclut un indice de compétence dérivé et une métrique de fatigue dérivée pour des pilotes associés à l'ensemble de données de vol ; et
l'incorporation (1312) des données de facteurs humains dans l'ensemble de données contextuelles agrégées, dans lesquelles les données de facteurs humains comprennent le premier ensemble de données spécifiques au pilote et le deuxième ensemble de données spécifiques au pilote, et dans lequel le modèle d'IA est créé à l'aide de l'ensemble de données contextuelles agrégées incluant les données de facteurs humains.

9. Système informatique central (200-400) destiné à créer et à utiliser un modèle d'Intelligence Artificielle (IA) pour analyser des performances d'atterrissage passées pour un ou plusieurs aéronefs, le système informatique central comprenant :
un élément de mémoire système (204-404) ;
un dispositif de communication (206, 308, 408) configuré pour établir des connexions de communication avec un ou plusieurs serveurs distants via un réseau de communication de données ;
un dispositif d'affichage (222, 314, 416) configuré pour présenter des éléments graphiques et du texte ; et
au moins un processeur (202-402) couplé de manière communicante à l'élément de mémoire système, au dispositif de communication et au dispositif d'affichage, ledit au moins un processeur étant configuré pour :
créer (1502) le modèle d'IA sur la base d'un ensemble agrégé de données de performance d'atterrissage comprenant des paramètres de données historiques d'atterrissage pour une pluralité d'atterrissages d'aéronefs achevés ;
recevoir (1504) une entrée utilisateur sélectionnant l'un de la pluralité d'atterrissages d'aéronefs achevés correspondant à un sous-ensemble de l'ensemble agrégé de données de performance d'atterrissage, via une interface utilisateur couplée de manière communicante audit au moins un processeur ;
utiliser (1506) le modèle d'IA pour mettre en œuvre une évaluation dudit un de la pluralité d'atterrissages d'aéronefs achevés et du sous-ensemble ;
identifier (1508) une ou plusieurs causes probables d'un événement de performance de l'aéronef survenant au cours dudit un de la pluralité d'atterrissages d'aéronefs achevés, sur la base de l'évaluation ; et
présenter (1510) des éléments graphiques représentant l'événement de performance de l'aéronef, lesdites une ou plusieurs causes probables, et ledit un de la pluralité d'atterrissages d'aéronefs achevés, via le dispositif d'affichage.

10. Système informatique central (200-400) de la revendication 9,
dans lequel ledit au moins un processeur (202-402) est en outre configuré pour créer le modèle d'IA, par :
l'incorporation d'un cadre d'apprentissage automatique dans le modèle d'IA, dans lequel le cadre d'apprentissage automatique comprend au moins l'un parmi un réseau de neurones artificiels (ANN) ou des algorithmes d'apprentissage automatique, afin de créer le modèle d'IA ; et
l'entraînement du modèle d'IA à l'aide d'un ensemble de données contextuelles agrégées et du cadre d'apprentissage automatique, afin de générer un modèle d'IA entraîné.

11. Système informatique central (200-400) de la revendication 9 ou la revendication 10, dans lequel ledit au moins un processeur (202-402) est en outre configuré pour mettre en œuvre des opérations incluant :
la mise à jour dynamique et l'utilisation du modèle d'IA, par :
l'obtention d'un nouvel ensemble de données contextuelles comprenant au moins l'un parmi un chargement de fichier d'exportation de données de vol et un ensemble de données de vol en temps réel obtenues pendant le vol ;
l'incorporation du nouvel ensemble de données contextuelles dans l'ensemble agrégé de données de performance d'atterrissage, afin de générer un ensemble mis à jour de données contextuelles agrégées ;
la mise à jour du modèle d'IA à l'aide de l'ensemble mis à jour de données contextuelles agrégées, afin de créer un modèle d'IA mis à jour ; et
l'application du modèle d'IA mis à jour à l'ensemble de données de vol afin de mettre en œuvre une analyse statistique.

12. Système informatique central (200-400) de l'une quelconque des revendications 9 à 11, comprenant en outre l'interface utilisateur (206-406) couplée de manière communicante audit au moins un processeur (202-402), l'interface utilisateur étant configurée pour recevoir des données d'entrée utilisateur ; dans lequel ledit au moins un processeur est en outre configuré pour :
recevoir une entrée utilisateur identifiant un ou plusieurs aéroports et pistes pour mettre en œuvre une analyse statistique, via l'interface utilisateur ;
identifier un sous-ensemble de données de vol applicable auxdits un ou plusieurs aéroports et pistes ;
appliquer le modèle d'IA audit sous-ensemble de données de vol ; et
générer un ensemble de résultats sur la base de l'analyse statistique du sous-ensemble de données de vol.

13. Système informatique central (200-400) de l'une quelconque des revendications 9 à 12, dans lequel ledit au moins un processeur (202-402) est en outre configuré pour :
mettre en forme un ensemble de résultats en vue d'une présentation via un ou plusieurs dispositifs informatiques secondaires externes au système informatique central, dans lequel lesdits un ou plusieurs dispositifs informatiques secondaires comprennent au moins l'un parmi un dispositif avionique embarqué d'aéronef et un dispositif informatique personnel configuré pour stocker, maintenir et exécuter une application de sac de vol électronique (EFB) ; et
transmettre l'ensemble de résultats auxdits un ou plusieurs dispositifs informatiques secondaires, via le dispositif de communication (206, 308, 408).

14. Système informatique central (200-400) de l'une quelconque des revendications 9 à 13, dans lequel ledit au moins un processeur (202-402) est en outre configuré pour :
héberger une application web comprenant une interface utilisateur graphique (GUI) et des fonctionnalités associées pour l'interaction de l'utilisateur avec un ensemble de résultats ;
fournir un accès à l'application web via le dispositif de communication (206, 308, 408) et le réseau de communication de données ;
recevoir des sélections d'entrée utilisateur destinées à l'application web depuis un système informatique secondaire via le dispositif de communication ; et
en réponse aux sélections d'entrée utilisateur, présenter les données sélectionnées par l'utilisateur via la GUI de l'application web.

15. Système informatique central (200-400) de l'une quelconque des revendications 9 à 14, dans lequel ledit au moins un processeur (202-402) est en outre configuré pour obtenir un ensemble de données contextuelles agrégées, par :
l'établissement de connexions de communication avec un ou plusieurs serveurs distants, via le dispositif de communication (206, 308, 408) ;
l'obtention de données météorologiques historiques, de données d'aéroport et de contrôle du trafic aérien (ATC), et de données spécifiques à l'aéronef et au vol, applicables à l'ensemble de données de vol via les connexions de communication, dans lesquelles les données météorologiques historiques incluent des vitesses de vent historiques, des conditions historiques de couverture nuageuse, des conditions historiques de visibilité, des conditions historiques de précipitations et des conditions historiques de température associées à l'ensemble de données de vol, dans lesquelles les données météorologiques comprennent au moins les données météorologiques historiques, dans lesquelles les données d'aéroport et d'ATC incluent au moins des données du service d'information de vol d'aérodrome automatique (ATIS), des données de spécifications d'aéroport, des données de longueur de piste, des données de taux d'arrivée à l'aéroport, des données de temps de roulage à l'arrivée à l'aéroport et des données de temps de roulage au départ de l'aéroport, dans lesquelles les données spécifiques à l'aéronef et au vol incluent au moins des données d'état de vol provenant d'enregistreurs embarqués de l'aéronef, des données de plan de vol, des données d'état de l'aéronef, des données de maintenance basée sur l'état (CBM), des données de spécification de l'aéronef et des données de messages aux navigants aériens (NOTAMs), et dans lesquelles les données météorologiques historiques, les données d'aéroport et ATC et les données spécifiques à l'aéronef et au vol sont stockées par lesdits un ou plusieurs serveurs distants ; et
l'incorporation des données météorologiques historiques, des données d'aéroport et d'ATC et des données spécifiques à l'aéronef et au vol dans l'ensemble de données contextuelles agrégées, dans lequel le modèle d'IA est créé à l'aide de l'ensemble de données contextuelles agrégées incluant les données météorologiques historiques, les données d'aéroport et d'ATC et les données spécifiques à l'aéronef et au vol.

16. Système informatique central (200-400) de l'une quelconque des revendications 9 à 15, dans lequel ledit au moins un processeur (202-402) est en outre configuré pour obtenir un ensemble de données contextuelles agrégées, par :
l'établissement de connexions de communication avec un ou plusieurs serveurs distants, via le dispositif de communication (206, 308, 408) ;
l'obtention d'un premier ensemble de données spécifiques au pilote applicables à un ensemble de données de vol via les connexions de communication, dans lequel le premier ensemble de données spécifiques au pilote comprend au moins des données de certification du pilote, des données d'heures de formation du pilote et des données de cycle de service du pilote, et dans lequel le premier ensemble de données spécifiques au pilote est stocké par lesdits un ou plusieurs serveurs distants ;
la dérivation d'un deuxième ensemble de données spécifiques au pilote à l'aide du premier ensemble de données spécifiques au pilote, dans lequel le deuxième ensemble de données spécifiques au pilote inclut un indice de compétence dérivé et une métrique de fatigue dérivée pour des pilotes associés à l'ensemble de données de vol ; et
l'incorporation du premier ensemble de données spécifiques au pilote et du deuxième ensemble de données spécifiques au pilote dans l'ensemble de données contextuelles agrégées, dans lesquelles des données de facteurs humains comprennent le premier ensemble de données spécifiques au pilote et le deuxième ensemble de données spécifiques au pilote, et dans lequel le modèle d'IA est créé à l'aide de l'ensemble de données contextuelles agrégées incluant les données de facteurs humains.

17. Support non transitoire lisible par ordinateur contenant des instructions sur ledit support qui, lorsqu'elles sont exécutées par un processeur, mettent en œuvre un procédé tel que défini dans l'une quelconque des revendications 1 à 8.
